(19) Europäisches Patentamt
European Patent Office
Office européen des brevets

(11) **EP 2 528 978 B1**

(12) **EUROPÄISCHE PATENTSCHRIFT**

(45) Veröffentlichungstag und Bekanntmachung des Hinweises auf die Patenterteilung:
**13.11.2013 Patentblatt 2013/46**

(21) Anmeldenummer: **11701502.4**

(22) Anmeldetag: **24.01.2011**

(51) Int Cl.:
**C09D 133/00** (2006.01)

(86) Internationale Anmeldenummer:
**PCT/EP2011/050884**

(87) Internationale Veröffentlichungsnummer:
**WO 2011/092130 (04.08.2011 Gazette 2011/31)**

(54) **BESCHICHTUNGSMITTEL ENTHALTEND KOMPOSITPARTIKEL**

COATING COMPOSITION CONTAINING COMPOSITE PARTICLES

COMPOSITION DE REVÊTEMENTCONTENANT DES PARTICULES COMPOSITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2010 EP 10151764**

(43) Veröffentlichungstag der Anmeldung:
**05.12.2012 Patentblatt 2012/49**

(73) Patentinhaber: **BASF SE**
**67056 Ludwigshafen (DE)**

(72) Erfinder:
• **LOHMEIJER, Bas**
**68199 Mannheim (DE)**
• **WAGNER, Oliver**
**67574 Osthofen (DE)**
• **JAHNS, Ekkehard**
**69469 Weinheim (DE)**

(56) Entgegenhaltungen:
**DE-A1-102004 054 048**

**Beschreibung**

Die vorliegende Erfindung betrifft ein Beschichtungsmittel in Form einer wässrigen Zusammensetzung enthaltend:

| | |
|---|---|
| 25 bis 55 Gew.-% | Kompositpartikel mit einer mittleren Teilchengröße von 50 bis 350 nm in Form einer wässrigen Dispersion, welche aufgebaut sind aus |
| | - 20 bis 60 Gew.-% bezogen auf den Kompositpartikel aus anorganischem Feststoff mit einer mittleren Teilchengröße von 5 bis 100 nm, |
| | - 40 bis 90 Gew.-%, bevorzugt 40 bis 80 Gew.-% bezogen auf den Kompositpartikel aus einer Polymermatrix mit einem $T_g$ im Bereich von -60 bis +40 °C, die durch radikalische Emulsionspolymerisation wenigstens eines ethylenisch ungesättigten Monomers erhältlich ist und |
| 20 bis 50 Gew.-% | Füllstoffe, wobei 5 bis 40 Gew.-% bezogen auf dem Gesamtfeststoffgehalt ausgewählt sind unter Aluminiumsilikaten, Borsilikatgläsern, Polymethylmethacrylatteilchen und Polystyrolteilchen |
| 1 bis 30 Gew.-% | Pigmente und |
| 0 bis 5 Gew.-% | eines oder mehrerer Verdickungsmittel |
| 0,1 bis 20 Gew.-% | weitere Hilfsmittel |

jeweils bezogen auf den Gesamtfeststoffgehalt, sowie ihre Verwendung zur Beschichtung von Flächen, Objekten, Substraten und Untergründen mit permanenten Wasserkontakt insbesondere mit Schwimmbadwasser.

Kompositpartikel und Verfahren zu ihrer Herstellung in Form von wässrigen Kompositpartikel-Dispersionen sowie deren Verwendung in Anstrichmitteln sind dem Fachmann bekannt und beispielsweise in den Schriften EP-A 572 128, WO 0118081, WO 0129106 und WO 03000760 beschrieben. Weiterhin beschreibt die ältere europäische Anmeldung 09157984.7 ein Verfahren zur Herstellung einer wässrigen Dispersion von Kompositpartikeln aus ethylenisch ungesättigten Monomeren und feinteiligem Siliciumdioxid nach einem zweistufigen Polymerisationsverfahren.

Ferner ist dem Fachmann die Verwendung von Kompositpartikel-Dispersionen in Holzbeschichtungsformulierungen bekannt, beispielsweise wenn ein ausgewogenes Verhältnis zwischen der Härte der Beschichtung, welche eine frühe Blockfestigkeit der Beschichtung gewährleistet, und der Elastizität der Beschichtung, welche eine gute Stabilität der Beschichtung bei Temperaturschwankungen sicherstellt, angestrebt wird. So beschreibt die WO 2008/009596 die Verwendung einer wässrigen Dispersion von Kompositpartikeln aus ethylenisch ungesättigten Monomeren und Siliciumdioxid als Bindemittel in Holzbeschichtungsformulierungen, welche eine geringere Wasserpermeabilität der Holzbeschichtung aufweisen.

Die ältere europäische Anmeldung 08163496.6 lehrt die Verwendung einer wässrigen Kompositpartikel-Dispersion deren Teilchen aus ethylenisch ungesättigten Monomeren und feinteiligem Siliciumdioxid aufgebaut sind, als Bindemittel in elastischen Beschichtungsmassen wie Anstrichmittel, die eine verbesserte Elastizität und Wasserfestigkeit bei gleichzeitig hoher Anschmutzresistenz und Wasserdampfdurchlässigkeit aufweisen.

Auch wenn eine Fassadenfarbe bereits eine hohe Wasserfestigkeit aufweisen muss, so sind die Anforderungen an Schwimmbadfarben deutlich höher. Eine Fassadenfarbe kann nach Feuchtebelastung durch z.B. Regen immer wieder austrocknen. Eine Fassadenfarbe ist üblicherweise auch keinen großen mechanischen Belastungen ausgesetzt. Eine Schwimmbadfarbe zum Anstrich eines Schwimmbeckens ist zumindest im Sommerhalbjahr oder in frostfreien Gegenden das ganze Jahr dem Schwimmbadwasser ausgesetzt. Große Teile des Schwimmbeckens sind mit Wasser gefüllt, die Farbe ist andauernd mit Wasser überdeckt. Als Stand der Technik werden heute üblicherweise lösemittelhaltige Farben mit Chlorkautschuk als Bindemittel eingesetzt. Diese Technologie hat sich als einigermaßen beständig für den ständigen Kontakt mit Wasser heraus gestellt. Heutzutage sind jedoch zunehmend lösemittelarme oder lösemittelfreie Farben aus Gründen der Arbeitshygiene oder aus Umweltfreundlichkeit nachgefragt. Wasserbasierte Farben mit zum Beispiel Polymerdispersionen als Bindemittel, wie sie schon mit Erfolg im Fassadenbereich eingesetzt werden, konnten sich im Schwimmbadbereich nicht durchsetzen. Nach dem Beschichten und Trocknen dieser konventionellen Farben mit Styrolacrylat oder Reinacrylatbindemittel treten beim dauernden Wasserkontakt oft Blasenbildungen auf, die eine unzureichende Haftung auf den üblichen Substraten eines Schwimmbads anzeigen. Zudem ist die mechanische Stabilität dieser Farben mit konventionellen Bindemitteln bei dauerndem Wasserkontakt nicht hoch genug. Bei Kontakt mit Personen oder Reinigungsgeräten werden diese Farben sehr leicht beschädigt.

Es bestand also nach wie vor die Aufgabe eine Farbbeschichtung auf Basis eines Wasser basierenden Bindemittels zu finden, die bei andauerndem Wasserkontakt, zum Beispiel bei einer Schwimmbadfarbe, eine gute Haftung zum Untergrund behält und eine gute mechanische Stabilität zeigt.

Dem gemäß wurden die obengenannten Beschichtungsmittel gefunden, sowie ihre Verwendung zur Beschichtung von Flächen mit permanenten Wasserkontakt insbesondere mit Schwimmbadwasser.

Kompositpartikel, welche aus Polymerisat und feinteiligem anorganischem Feststoff aufgebaut sind, insbesondere in Form ihrer wässrigen Dispersionen (wässrige Kompositpartikel-Dispersionen) sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix und feinteiligem anorganischen Feststoff aufgebaute Partikel in disperser Verteilung befindlich enthalten. Erfindungsgemäß sind Kompositpartikel geeignet mit einer mittleren Teilchengröße von 50 bis 350 nm bevorzugt von 60 bis 200 nm.

Die Bestimmung der mittleren Teilchengröße (Z-Mittel) des anorganischen Feststoffs sowie der nach dem Kompositpartikel erfolgt im Rahmen dieser Schrift generell nach der Methode der quasielastischen Lichtstreuung (DIN-ISO 13321) beispielsweise mit einem High Performance Particle Sizer (HPPS) der Fa. Malvern Instruments Ltd.

Die erfindungsgemäß geeigneten Kompositpartikel werden aus anorganischem Feststoff mit einer mittleren Teilchengröße von 5 bis 100 nm aufgebaut.

Als anorganischen Feststoff sind prinzipiell Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol® SN-Marken der Fa. Nyacol Nano Technologies Inc.), Aluminiumoxid (beispielsweise kommerziell verfügbar als Nyacol® AL-Marken der Fa. Nyacol Nano Technologies Inc.), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Nyacol Nano Technologies Inc.), Cer-(IV)-oxid (beispielsweise kommerziell verfügbar als Nyacol® CEO2-Marken der Fa. Nyacol Nano Technologies Inc.) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Fa. Sasol Germany GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [$Ca_5\{(PO_4)_3OH\}$], Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH und Optigel® EX 0482 (Marken der Südchemie AG), Saponit® SKS-20 und Hektorit® SKS 21 (Marken der Hoechst AG) sowie Laponite® RD und Laponite® GS (Marken der Rockwood Holdings Inc.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tartrate, wie Calciumtartrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil® (Marke der Fa. Evonik AG), Nalco® (Marke der Fa. Nalco), Levasil® (Marke der Fa. H.C. Stark GmbH), Ludox® (Marke der Fa. DuPont), Nyacol® und Bindzil® (Marken der Fa. Akzo-Nobel) und Snowtex® (Marke der Fa. Nissan Chemical Industries, Ltd.) bezogen werden. Erfindungsgemäß geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und Atmosphärendruck (1 atm = 1,013 bar absolut) ≤1 g/l, bevorzugt ≤0,1 g/l und insbesondere bevorzugt ≤0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphosphat, Magnesiummetaphosphat, Calciumpyrophosphat, Magnesiumpyrophosphat, Orthosilikate, wie Lithiumorthosilikat, Calcium-/Magnesiumorthosilikat, Aluminiumorthosilikat, Eisen-(II)-orthosilikat, Eisen-(III)-orthosilikat, Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Produkte der Nanofil®-, Optigel®-, Cloisite®- (Marken der Fa. Südchemie AG), Somasif®-, Lucentite®- (Marken der Fa. CBC Japan Co., Ltd.), Saponit®- Hektorit®-(Marken der Fa. Höchst AG) sowie Laponite®-Reihen (Marke der Fa. Rockwood Holdings, Inc.), Eisen-(II)-oxid, Eisen-(III)-oxid, Eisen-(II/III)-oxid, Titandioxid, Hydroxylapatit, Zinkoxid und Zinksulfid.

Bevorzugt ist der wenigstens eine feinteilige anorganische Feststoff ausgewählt aus der Gruppe umfassend Siliziumdioxid, Schichtsilikate, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid.

Insbesondere bevorzugt sind siliziumhaltige Verbindungen, wie pyrogene Kieselsäure, kolloidale Kieselsäure (Siliziumdioxid) und/oder Schichtsilikate.

Vorteilhaft können auch die kommerziell verfügbaren Verbindungen der Aerosil®-, Levasil®-, Ludox®-, Nyacol®-, Nalco®- und Bindzil®-Marken (Siliziumdioxid), Nanofil®-, Optigel®-, Somasif®-, Cloisite®-, Lucentite®-, Saponit®-, Hektorit®- sowie Laponite®-Marken (Schichtsilikate), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CEO2-Marken (Cer-(IV)-oxid) und Sachtotec®-Marken (Zinkoxid) in den erfindungsgemäßen Verfahren eingesetzt werden.

Die zur Herstellung der Kompositpartikel einsetzbaren feinteiligen anorganischen Feststoffe sind so beschaffen, dass die im wässrigen Polymerisationsmedium dispergierten Feststoffteilchen einen Teilchendurchmesser von ≤100 nm aufweisen. Erfolgreich werden solche feinteiligen anorganischen Feststoffe eingesetzt, deren dispergierte Teilchen einen Teilchendurchmesser ≥5 nm aber ≤90 nm, ≤80 nm, ≤70 nm, ≤60 nm, ≤50 nm, ≤40 nm, ≤30 nm, ≤20 nm oder ≤10 nm und alle Werte dazwischen aufweisen. Mit Vorteil werden feinteilige anorganische Feststoffe eingesetzt, welche einen Teilchendurchmesser ≤50 nm aufweisen.

Die erfindungsgemäß geeigneten Kompositpartikel haben eine Polymermatrix mit einem $T_g$ im Bereich von -60 bis +40°C. Unter der Glasübergangstemperatur $T_g$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

In der Regel handelt es sich bei der Polymermatrix um ein Copolymer, welches durch Copolymerisation von zwei oder mehr Monomeren M erhalten wird. Dem Fachmann ist es dabei möglich, durch gezielte Wahl der Monomerzusammensetzung Polymere mit einer Glasübergangstemperatur im Bereich von -60 bis +20°C herzustellen.

Nach Fox (siehe Ullmanns Enzyklopädie der technischen Chemie, 4. Auflage, Band 19, Weinheim (1980), S. 17, 18) kann man die Glasübergangstemperatur $T_g$ abschätzen. Es gilt für die Glasübergangstemperatur von schwach bzw. unvernetzten Mischpolymerisaten bei großen Molmassen in guter Näherung:

$$\frac{1}{Tg} = \frac{X^1}{Tg^1} + \frac{X^2}{Tg^2} + \ldots \ldots \frac{X^n}{Tg^n}$$

wobei $X^1$, $X^2$, ..., $X_n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, 5.ed. Weinheim, Vol. A 21 (1992) S. 169 oder aus J. Brandrup, E.H. Immergut, Polymer Handbook 3rd ed, J. Wiley, New York 1989 bekannt.

Die Polymermatrix der Kompositpartikel ist durch radikalische Emulsionspolymerisation wenigstens eines ethylenisch ungesättigten Monomers erhältlich.

Als ethylenisch ungesättigte Monomere kommen alle diejenigen in Betracht, die sich in wässrigem Medium in einfacher Weise radikalisch polymerisieren lassen und welche dem Fachmann nach der Methode der wässrigen Emulsionpolymerisation geläufig sind. In der Regel sind die Monomere M ausgewählt unter Estern α,β-ethylenisch ungesättigter Mono- und Dicarbonsäuren mit $C_1$-$C_{20}$-Alkanolen, Vinylaromaten, Estern von Vinylalkohol mit $C_1$-$C_{18}$-Monocarbonsäuren, ethylenisch ungesättigten Nitrilen, $C_2$-$C_8$-Monoolefinen, nicht aromatischen Kohlenwasserstoffen mit mindestens zwei konjugierten Doppelbindungen, ethylenisch ungesättigten Monomeren mit wenigstens einer Säuregruppe und ethylenisch ungesättigten Monomeren mit wenigstens einer Amino-, Amido-, Ureido- oder N-heterocyclische Gruppe und/oder deren am Stickstoff protonierten alkylierten Ammoniumderivate oder ethylenisch ungesättigten Monomeren, welche wenigstens eine silziumhaltige funktionelle Gruppe aufweisen (Silanmonomere).

Geeignete Monomere M sind beispielsweise:

(a): Ester $\alpha,\beta$-ethylenisch ungesättigter Mono- und Dicarbonsäuren mit $C_1$-$C_{20}$-Alkanolen, insbesondere die Ester der Acrylsäure, Methacrylsäure, und der Ethacrylsäure, Maleinsäure, Fumarsäure und Itaconsäure mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-din-butylester

(b): Vinylaromaten bevorzugt Styrol, wie Styrol, $\alpha$-Methylstyrol, o-Chlorstyrol oder Vinyltoluole

(c): Ester von Vinylalkohol mit $C_1$-$C_{18}$-Monocarbonsäuren wie Vinylacetat, Vinylpropionat, Vinyl-n-butyrat, Vinyllaurat und Vinylstearat,

(d): Ethylenisch ungesättigte Nitrile wie Acrylnitril und Methacrylnitril.

(e): $C_2$-$C_8$-Monoolefine und nicht aromatische Kohlenwasserstoffe mit mindestens zwei konjugierten Doppelbindungen wie Ethylen, Propylen, Isobutylen, Isopren und Butadien.

Die zuvor genannten Monomere M können einzeln, in Form von Mischungen innerhalb einer Monomerklasse oder in Form von Mischungen aus verschiedenen Monomerklassen eingesetzt werden, soweit das Polymer eine Glasübergangstemperatur $T_g$ im Bereich von -60 bis +20°C aufweist. Mit besonderem Vorteil wird die Zusammensetzung der ethylenisch ungesättigten Monomeren so gewählt, dass das resultierende Polymerisat eine Glasübergangstemperatur $\leq$15 °C, insbesondere bevorzugt $\leq$10 °C und häufig $\geq$-50 °C und oft $\geq$-40 °C oder $\geq$-30 °C aufweist.

Die Monomere M umfassen dabei in der Regel wenigstens 80 Gew.-%, bevorzugt mindestens 85 Gew.-%, besonders bevorzugt mindestens 90 Gew.-%, bezogen auf die Gesamtmonomermenge, eines monoethylenisch ungesättigten Monomers M1 (Hauptmonomer) mit einer Wasserlöslichkeit < 10g/l bei 25°C und 1 bar in entionisiertem Wasser. Hierzu zählen insbesondere die Monomere der Klassen (a), (b), (c) und (e). Bevorzugt werden als Hauptmonomere M1 Monomere der Klassen (a) und (b).

Zusätzlich zu wenigstens einem Hauptmonomer M1 kann bei der radikalischen Emulsionspolymerisation zur Herstellung der Polymermatrix wenigstens ein weiteres Monomer M2 eingesetzt werden, die ethylenisch ungesättigt sind und die entweder wenigstens eine Säuregruppe und/oder deren entsprechendes Anion enthalten oder solche ethylenisch ungesättigten Monomere M2, die wenigstens eine Amino-, Amido-, Ureido- oder N-heterocyclische Gruppe und/oder deren am Stickstoff protonierten oder alkylierten Ammoniumderivate enthalten. Diese Monomere M2 liegen allgemein in untergeordnetem Maße vor (Nebenmonomere). Bezogen auf die Gesamtmonomerenmenge, beträgt die Menge an Monomeren M2 $\leq$10 Gew.-%, oft $\geq$0,1 und $\leq$7 Gew.-% und häufig $\geq$0,2 und $\leq$5 Gew.-%.

Als ethylenisch ungesättigte Monomere mit wenigstens einer Säuregruppe kann die Säuregruppe beispielsweise eine Carbonsäure-, Sulfonsäure-, Schwefelsäure-, Phosphorsäure- und/oder Phosphonsäuregruppe sein. Beispiele für solche Monomere M2 sind Acrylsäure, Methacrylsäure, Maleinsäure, Fumarsäure, Itaconsäure, Crotonsäure, 4-Styrolsulfonsäure, 2-Methacryloxyethylsulfonsäure, 2-Acrylamido-2-methylpropansulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wenigstens eine Säuregruppe aufweisenden ethylenisch ungesättigten Monomeren einsetzen. Als Alkalimetall insbesondere bevorzugt ist Natrium oder Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, 2-Acrylamido-2-methylpropansulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure als Monomere M2 eingesetzt.

Weiterhin werden als Monomere M2 ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere M2, die wenigstens eine Aminogruppe enthalten sind 2-Amino-ethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethyl-acrylat, 2-(N-Methylamino)ethylmethacrylat, 2-(N-Ethylamino)ethylacrylat, 2-(N-Ethyl-amino)ethylmethacrylat, 2-(N-n-Propylamino)ethylacrylat, 2-(N-n-Propylamino)ethyl-methacrylat, 2-(N-iso-Propylamino)ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl® TBAEMA der Fa. Arkema Inc.), 2-(N,N-Dimethylamino)ethylacrylat (beispielsweise kommerziell verfügbar als Norsocryl® ADAME der Fa. Arkema Inc.), 2-(N,N-Dimethylamino)ethylmethacrylat (beispielsweise kommerziell verfügbar als Norsocryl® MADAME der Fa. Arkema Inc.), 2-(N,N-Diethylamino)-ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethyl-acrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)-propylmethacrylat, 3-(N-n-Propylamino)propylacrylat, 3-(N-n-Propylamino)propylmeth-acrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino)propylmethacrylat, 3-(N,N-Di-iso-propylamino)propylacrylat und 3-(N,N-Di-iso-propylamino)propylmethacrylat.

Beispiele für Monomere M2, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N,N'-Methylenbisacrylamid, N-(Diphenylmethyl)acrylamid, N-Cyclohexyl-acrylamid, aber auch N-Vinylpyrrolidon und N-Vinylcaprolactam.

Beispiele für Monomere M2, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl® 100 der Fa. Arkema Inc.).

Beispiele für Monomere M2, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden als Monomere M2 folgende Verbindungen eingesetzt: 2-Vinylpyridin, 4-Vinylpyridin, 2-Vinylimidazol, 2-(N,N-Dimethylamino)ethylacrylat, 2-(N,N-Dimethyl-amino)ethylmethacrylat, 2-(N,N-Diethylamino)ethylacrylat, 2-(N,N-Diethylamino)ethyl-methacrylat, 2-(N-tert.-Butylamino)ethylmethacrylat, N-(3-N',N'-Dimethylaminopropyl)-methacrylamid und 2-(1-Imidazolin-2-onyl)ethylmethacrylat.

Abhängig vom pH-Wert des wässrigen Reaktionsmediums kann ein Teil oder die Gesamtmenge der vorgenannten stickstoffhaltigen Monomere M2 in der am Stickstoff protonierten quartären Ammoniumform vorliegen.

Als Monomere M2, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl® ADAMQUAT MC 80 der Fa. Arkema Inc.), 2-(N,N,N-Trimethylammonium)ethylmethacrylatchlorid (beispielsweise kommerziell verfügbar als Norsocryl® MADQUAT MC 75 der Fa. Arkema Inc.), 2-(N-Methyl-N,N-diethylammonium)ethylacrylatchlorid, 2-(N-Methyl-N,N-diethylammonium)ethyl-methacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)-ethylacrylatchlorid (beispielsweise kommerziell verfügbar als Norsocryl® ADAMQUAT BZ 80 der Fa. Arkema Inc.), 2-(N-Benzyl-N,N-dimethylammonium)ethylmethacrylat-chlorid (beispielsweise kommerziell verfügbar als Norsocryl® MADQUAT BZ 75 der Fa. Elf Atochem), 2-(N-Benzyl-N,N-diethylammonium)ethylacrylatchlorid, 2-(N-Benzyl-N,N-diethylammonium)ethylmethacrylatchlorid, 2-( N-Benzyl-N,N-dipropylammonium)ethylacrylatchlorid, 2-( N-Benzyl-N,N-dipropylammonium)ethylmethacrylatchlorid, 3-(N,N,N-Trimethylammonium)propylacrylatchlorid, 3-(N,N,N-Trimethylammonium)propylmeth-acrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium)-propylacrylatchlorid, 3-(N-Methyl-N,N-dipropylammonium)propylmethacrylatchlorid, 3-(N-Benzyl-N,N-dimethylammonium)propylacrylatchlorid, 3-(N-Benzyl-N,N-dimethyl-ammonium)propylmethacrylatchlorid, 3-(N-Benzyl-N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)-propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium)ethyl-ethacrylatchlorid verwendet.

Häufig kann es vorteilhaft sein, neben den vorgenannten Monomeren zusätzlich ethylenisch ungesättigte Monomere M3 einzusetzen, welche wenigstens eine silziumhaltige funktionelle Gruppe aufweisen (Silanmonomere), wie beispielsweise Vinylalkoxysilane, wie insbesondere Vinyltrimethoxysilan, Vinyltriethoxysilan, Vinyltriisopropoxysilan, Vinytriphenoxysilan, Vinyltris(dimethylsiloxy)silan, Vinyltris(2-methoxyethoxy)silan, Vinyltris(3-methoxypropoxy)silan und/oder Vinyltris(trimethylsiloxy)silan, Acryloxysilane, wie insbesondere 2-(Acryloxyethoxy)trimethylsilan, Acryloxymethyltrimethylsilan, (3-Acryloxypropyl)dimethylmethoxysilan, (3-Acryloxypropyl)methylbis(trimethyliloxy)silan, (3-Acryloxypropyl)methyldimethoxysilan, (3-Acryloxypropyl)trimethoxysilan und/oder (3-Acryloxypropyl)tris(trimethylsiloxy)silan, Methacryloxysilane, wie insbesondere (3-Methacryloxypropyl)trimethoxysilan, (3-Methacryloxypropyl)methyldimethoxysilan, (3-Methacryloxypropyl)dimethylmethoxysilan, (3-Methacryloxypropyl)triethoxysilan (Methacryloxymethyl)methyldiethoxysilan und/oder (3-Methacryloxypropyl)-methyldiethyloxysilan. Erfindungsgemäß besonders vorteilhaft werden Acryloxysilane und/oder Methacryloxysilane, insbesondere Methacryloxysilane, wie bevorzugt (3-Methacryloxypropyl)trimethoxysilan, (3-Methacryloxypropyl)methyldimethoxysilan, (3-Methacryloxypropyl)dimethylmethoxysilan, (3-Methacryloxypropyl)triethoxysilan, (Methacryloxymethyl)methyldiethoxysilan und/oder (3-Methacryloxypropyl)methyldiethoxysilan. Die Menge an Silanmonomere beträgt $\geq 0,01$ und $\leq 10$ Gew.-%, vorteilhaft $\geq 0,1$ und $\leq 5$ Gew.-% und insbesondere vorteilhaft $\geq 0,1$ und $\leq 2$ Gew.-%, jeweils bezogen auf die Gesamtmonomerenmenge.

Weiterhin können dem bzw. den Monomeren Vernetzer zugesetzt werden, welche üblicherweise die innere Festigkeit der Verfilmungen der Polymermatrix erhöhen. Sie weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha$, $\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Glycidylacrylat, Glycidylmethacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid, Acetylacetoxyethylacrylat bzw. -methacrylat, N-(Hydroxymethyl)-prop-2-enamid und N-(Hydroxymethyl)-2-methyl-2-propenamid.

Erfindungsgemäß werden die vorgenannten Vernetzer in Mengen $\leq 5$ Gew.-%, häufig $\geq 0,1$ und $\leq 3$ Gew.-% und oft $\geq 0,5$ und $\leq 2$ Gew.-%, jeweils bezogen auf die Gesamtmonomerenmenge zur Polymerisation eingesetzt.

Die erfindungsgemäß eingesetzten Kompositpartikel sind aufgebaut aus

- 20 bis 60 Gew.-% bevorzugt aus 20 bis 50 Gew.-%, insbesondere aus 30 bis 50 Gew.-% bezogen auf den Kompositpartikel, aus anorganischem Feststoff mit einer mittleren Teilchengröße von 5 bis 100 nm, und
- 40 bis 90 Gew.-%, bevorzugt 50 bis 80 Gew.-%, insbesondere 50 bis 70 Gew.-% bezogen auf den Kompositpartikel, aus einer Polymermatrix mit einem $T_g$ im Bereich von -60 bis +40 °C, die durch radikalische Emulsionspolymerisation eines oder mehrerer ethylenisch ungesättigten Monomers erhältlich ist.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,660, US-A 4,608,401, US-A 4,981,882, EP-A 104 498, EP-A 505 230, EP-A 572 128, GB-A 2 227 739, WO 0118081, WO 0129106, WO 03000760 sowie in Long et al., Tianjin Daxue Xuebao 1991, 4, Seiten 10 bis 15, Bourgeat-Lami et al., Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410, offenbart.

Die Herstellung der wässrigen Kompositpartikel-Dispersionen erfolgt dabei vorteilhaft dergestalt, dass ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergiermittels nach der Methode der radikalisch wässrigen Emulsionspolymerisation polymerisiert werden.

Erfindungsgemäss können alle, beispielsweise auch die nach dem vorgenannten Stand der Technik zugänglichen wässrigen Kompositpartikel-Dispersionen eingesetzt werden, zu deren Herstellung eine Monomerenmischung verwendet wurde, welche zu > 0 und < 10 Gew.-%, bevorzugt 0,1 bis 5 Gew.-% und insbesondere bevorzugt 0,5 bis 3 Gew.-% an Epoxidmonomere enthält.

Erfindungsgemäss können vorteilhaft solche wässrigen Kompositpartikel-Dispersionen eingesetzt werden, die unter Einsatz der Epoxidmonomeren-enthaltenden Monomerenmischung nach der in der WO 03000760 offenbarten Verfahrensweise hergestellt wurden.

Weiterhin können vorteilhaft Kompositpartikel-Dispersionen eingesetzt werden, die nach dem Verfahren der nicht vorveröffentlichten europäischen Patentanmeldung 09157984.7 hergestellt wurden. Dieses Verfahren zeichnet sich dadurch aus, dass der Kompositpartikel aufgebaut wird durch radikalische Emulsionspolymerisation bei der ethylenisch ungesättigte Monomere in wässrigem Medium dispers verteilt und mittels 0,05 bis 2 Gew.-% wenigstens eines radikalischen Polymerisationsinitiators in Gegenwart von 1 bis 1000 Gew.-% wenigstens eines dispers verteilten, feinteiligen anorganischen Feststoffes, jeweils bezogen auf die Gesamtmonomermenge, und wenigstens eines Dispergierhilfsmittels polymerisiert werden, indem

a) wenigstens eine Teilmenge des anorganischen Feststoffs in einem wässrigen Polymerisationsmedium in Form einer wässrigen Feststoffdispersion vorgelegt wird und daran anschließend 0,01 bis 20 Gew.-% der Gesamtmonomermenge und mindestens 60 Gew.-% der Gesamtmenge an radikalischem Polymerisationsinitiator zudosiert werden und die zudosierten Monomere unter Polymerisationsbedingungen bis zu einem Monomerenumsatz ≥80 Gew.-% polymerisiert werden (Polymerisationsstufe 1), und daran anschließend dem erhaltenen Polymerisationsgemisch

b) die gegebenenfalls verbliebene Restmenge des anorganischen Feststoffs, die gegebenenfalls verbliebene Restmenge des radikalischen Polymerisationsinitiators und die verbliebene Restmenge der Monomere unter Polymerisationsbedingungen zudosiert und bis zu einem Monomerenumsatz ≥90 Gew.-% polymerisiert werden (Polymerisationsstufe 2).

Nach dieser bevorzugten Verfahrensvariante wird klares Wasser, beispielsweise klares Trinkwasser, insbesondere vorteilhaft jedoch entionisiertes Wasser eingesetzt, dessen Gesamtmenge so bemessen wird, dass sie ≥30 und ≤99 Gew.-% und vorteilhaft ≥35 und ≤95 Gew.-% und insbesondere vorteilhaft ≥40 und ≤90 Gew.-%, bezogen auf die wässrige Kompositpartikel-Dispersion, beträgt.

Gemäß dieser bevorzugten Variante wird wenigstens eine Teilmenge des Wassers in Verfahrensschritt a) im Polymerisationsgefäß vorgelegt und die gegebenenfalls verbliebene Restmenge während der Polymerisationsstufe 1 oder 2 zudosiert.

Die anorganischen Feststoffe können sowohl in Form von Pulvern oder in Form stabiler wässriger Feststoffdispersionen, sogenannter Sole eingesetzt werden.

Die Herstellung von wässrigen Feststoffdispersionen erfolgt dabei häufig direkt bei der Synthese der feinteiligen anorganischen Feststoffe in wässrigem Medium oder alternativ durch Eindispergieren der feinteiligen anorganischen Feststoffe in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden. Häufig handelt es sich bei den wässrigen Feststoffdispersionen um stabile wässrige Feststoffdispersionen.

Unter stabilen wässrigen Feststoffdispersionen werden dabei solche wässrigen Feststoffdispersionen verstanden, die bei einer Anfangsfeststoffkonzentration von ≥0,1 Gew.-%, bezogen auf die wässrige Feststoffdispersion, noch eine Stunde nach ihrer Herstellung oder nach homogener Dispergierung der sedimentierten feinteiligen Feststoffe, ohne weiteren Energieeintrag (wie Rühren oder Schütteln) mehr als 90 Gew.-% des ursprünglich dispergierten Feststoffes in dispergierter Form enthalten.

Die quantitative Bestimmung der Anfangsfeststoffkonzentration und der Feststoffkonzentration nach einer Stunde erfolgt im Rahmen dieser Schrift über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Gemäß der bevorzugten Herstellungsvariante werden 1 bis 1000 Gew.-%, vorteilhaft 1 bis 100 Gew.-% und insbesondere vorteilhaft 2 bis 70 Gew.-% des anorganischen Feststoffes, bezogen auf die Gesamtmonomerenmenge verwendet.

Das bevorzugte Verfahren erfolgt dergestalt, dass in Verfahrensschritt a) wenigstens eine Teilmenge, oft ≥10, ≥20, ≥30 oder ≥40 Gew.-% und vorteilhaft ≥50, ≥60, ≥70, ≥80 oder ≥90 Gew.-% der Gesamtmenge des anorganischen Feststoffs im wässrigen Polymerisationsmedium unter Ausbildung einer wässrigen Feststoffdispersion vorgelegt wird. Die gegebenenfalls verbliebene Restmenge an anorganischem Feststoff wird dem wässrigen Polymerisationsmedium in Verfahrensschritt b) unter Polymerisationsbedingungen diskontinuierlich in einer oder mehreren Teilmengen oder kontinuierlich in gleich bleibenden oder sich verändernden Mengenströmen, insbesondere in Form einer wässrigen Feststoffdispersion zudosiert. Mit Vorteil wird jedoch in Verfahrensschritt a) die Gesamtmenge des anorganischen Feststoffs im wässrigen Polymerisationsmedium in Form einer wässrigen Feststoffdispersion vorgelegt. Wird der anorganische Feststoff in Pulverform eingesetzt, so kann es vorteilhaft sein, das feinteilige Feststoffpulver unter Zuhilfenahme geeigneter Hilfsaggregate, wie beispielsweise Rührer, Dispergatoren oder Ultraschallsonotroden im wässrigen Polymerisationsmedium zu dispergieren.

Bei der Herstellung der wässrigen Kompositpartikel-Dispersionen werden allgemein Dispergierhilfsmittel mitverwendet, die sowohl die feinteiligen anorganischen Feststoffteilchen, wie auch die Monomerentröpfchen und die gebildeten Kompositpartikel im wässrigen Polymerisationsmedium dispers verteilt halten und so die Stabilität der erzeugten wässrigen Kompositpartikel-Dispersionen gewährleisten. Als Dispergierhilfsmittel kommen sowohl die zur Durchführung von radikalischen wässrigen Emulsionspolymerisationen üblicherweise eingesetzten Schutzkolloide, wie auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale, anionische oder kationische Schutzkolloide sind in der WO 03/000760 auf Seite 13 beschrieben, auf deren Offenbarung ausdrücklich Bezug genommen wird.

Selbstverständlich können auch Gemische aus Emulgatoren und/oder Schutzkolloiden eingesetzt werden. Häufig werden als Dispergierhilfsmittel ausschließlich Emulgatoren eingesetzt, deren relative Molekulargewichte im Unterschied zu den Schutzkolloiden üblicherweise unter 1500 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische, anionische sowie kationische Emulgatoren sind in der WO 03/000760 auf den Seiten 13-15 beschrieben, auf deren Offenbarung ausdrücklich Bezug genommen wird.

Häufig werden zur Herstellung der wässrigen Kompositpartikel-Dispersionen ≥0,1 und ≤10 Gew.-%, oft ≥0,25 und ≤7,0 Gew.-% und häufig ≥0,5 und ≤5,0 Gew.-% an Dispergierhilfsmitteln, jeweils bezogen auf die Gesamtmonomermenge, eingesetzt.

Bevorzugt werden Emulgatoren, insbesondere nichtionische und/oder anionische Emulgatoren verwendet. Mit besonderem Vorteil werden anionische Emulgatoren eingesetzt.

Gemäß einer bevorzugten Verfahrensvariante ist es möglich, gegebenenfalls eine Teil-oder die Gesamtmenge an Dispergierhilfsmittel im Polymerisationsgefäß als Bestandteil des eine Teil- oder die Gesamtmenge des anorganischen Feststoffs enthaltenden wässrigen Polymerisationsmediums vorzulegen [Verfahrensschritt a)]. Es ist aber auch möglich, die Gesamtmenge oder die gegebenenfalls verbliebene Restmenge an Dispergierhilfsmittel während des Verfahrensschrittes a) und/oder b) dem wässrigen Polymerisationsmedium zuzuführen. Die Gesamtmenge oder die gegebenenfalls verbliebene Restmenge an Dispergierhilfsmittel kann dem wässrigen Polymerisationsmedium dabei diskontinuierlich in einer oder mehreren Portionen oder kontinuierlich mit gleichbleibenden oder sich verändernden Mengenströmen zudosiert werden. Insbesondere vorteilhaft wird wenigstens eine Teilmenge an Dispergierhilfsmittel in Verfahrensschritt a) vorgelegt. Werden die ethylenisch ungesättigten Monomeren in Verfahrensschritt a) und/oder b) in Form einer wässrigen Monomerenemulsion zudosiert, so werden werden Teilmengen an Dispergierhilfsmittel während des Verfahrensschrittes c) und/oder d), insbesondere als Bestandteil einer wässrigen Monomerenemulsion, eingesetzt.

Mit Vorteil werden in Verfahrensschritt a) ≥1 und ≤15 Gew.-% und insbesondere vorteilhaft ≥5 und ≤15 Gew.-% der Gesamtmonomerenmenge zudosiert.

Alle vorgenannten ethylenisch ungesättigten Monomere können dabei als separate Einzelströme oder im Gemisch diskontinuierlich in einer oder mehreren Portionen oder kontinuierlich mit gleichbleibenden oder sich ändernden Mengenströmen in der Verfahrensstufen a) und/oder b) zudosiert werden. Dabei kann die Zugabe der ethylenisch ungesättigten Monomeren in Substanz, in Form eines lösungsmittelfreien oder lösungsmittelhaltigen Monomerengemisches oder vorteilhaft in Form einer wässrigen Monomerenemulsion erfolgen. Selbstverständlich umfasst das erfindungsgemäße Verfahren auch die dem Fachmann geläufigen unterschiedlichsten Monomerzulauffahrweisen, wie beispielsweise Kern/Schale- oder Gradientenfahrweise.

Zur Auslösung der radikalischen Polymerisation kommen alle diejenigen radikalischen Polymerisationsinitiatoren (Radikalinitiatoren) in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (Al-BA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkali-hydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. Werden erfindungsgemäß Redoxinitiatorsysteme eingesetzt, so werden häufig die Oxidationsmittel und die Reduktionsmittel parallel zudosiert oder bevorzugt die Gesamtmenge des entsprechenden Oxidationsmittels vorgelegt und lediglich das Reduktionsmittel zudosiert. Die Gesamtmenge an Radikalinitiator wird bei Redoxinitiatorsystemen aus den Gesamtmengen an Oxidations- und Reduktionsmitteln gebildet. Als Radikalinitiatoren bevorzugt werden jedoch anorganische und organische Peroxide und insbesondere anorganische Peroxide, häufig in Form wässriger Lösungen eingesetzt. Insbesondere als Radikalinitiator bevorzugt sind Natriumperoxodisulfat, Kaliumperoxodisulfat, Ammoniumperoxodisulfat, Wasserstoffperoxid und/oder tert.-Butylhydroperoxid.

Erfindungsgemäß beträgt die Menge an insgesamt eingesetzten Radikalinitiator 0,05 bis 2 Gew.-%, vorteilhaft 0,1 bis 1,5 Gew.-% und insbesondere vorteilhaft 0,3 bis 1,0 Gew.%, jeweils bezogen auf die Gesamtmonomerenmenge.

Erfindungswesentlich ist, dass der wässrigen Feststoffdispersion in Verfahrensstufe a) insgesamt ≥0,01 und ≤20 Gew.-% der Gesamtmonomerenmenge und ≥60 Gew.-%, bevorzugt ≥70 Gew.-% sowie ≤90 Gew.-% oder ≤100 Gew.-% und insbesondere bevorzugt ≥75 und ≤85 Gew.-% der Gesamtmenge an radikalischem Polymerisationsinitiator zudosiert und die zudosierten ethylenisch ungesättigten Monomeren unter Polymerisationsbedingungen bis zu einem Monomerenumsatz ≥80 Gew.-%, bevorzugt ≤85 Gew.-% insbesondere bevorzugt ≥90 Gew.-% polymerisiert werden.

Dabei kann die Zugabe des Radikalinitiators zum wässrigen Polymerisationsmedium in Verfahrensstufe a) unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsmedium unter Bedingungen, welche nicht geeignet sind eine Polymerisationsreaktion auszulösen, beispielsweise bei tiefer Temperatur, zugegeben wird und danach im wässrigen Polymerisationsgemisch Polymerisationsbedingungen eingestellt werden.

In Verfahrensstufe a) kann die Zugabe des Radikalinitiators oder dessen Komponenten diskontinuierlich in einer oder mehreren Portionen oder kontinuierlich mit gleichbleibenden oder sich ändernden Mengenströmen erfolgen.

Die Bestimmung des Monomerenumsatzes ist dem Fachmann prinzipiell geläufig und erfolgt beispielsweise durch reaktionskalorimetrische Bestimmung.

Nachdem in Verfahrensschritt a) die Menge der eingesetzten Monomeren bis zu einem Umsatz ≥80 Gew.-% polymerisiert wurden (Polymerisationsstufe 1), werden im nachfolgenden Verfahrensschritt b) die gegebenenfalls verbliebene Restmenge, d.h. ≤90, ≤80, ≤70, ≤60 Gew.-% und vorteilhaft ≤50, ≤40, ≤30, ≤20 Gew.-% oder ≤10 Gew.-% des anorganischen Feststoffs die gegebenenfalls verbliebene Restmenge, d.h. ≤40, ≤30 oder bevorzugt ≥15 und ≤25 Gew.-% des radikalischen Polymerisationsinitiators und die verbliebene Restmenge, d.h. ≥80 und ≤99,99 Gew.-%, bevorzugt ≥85 und ≤99 Gew.-% und insbesondere bevorzugt ≤85 und ≤95 Gew.-% der ethylenisch ungesättigten Monomeren unter Polymerisationsbedingungen zudosiert und bis zu einem Monomerenumsatz ≥90 Gew.-% polymerisiert (Polymerisationsstufe 2). Dabei kann auch in Verfahrensschritt b) die Zudosierung der jeweiligen Komponenten als separate Einzelströme oder im Gemisch diskontinuierlich in einer oder mehreren Portionen oder kontinuierlich mit gleichbleibenden oder sich ändernden Mengenströmen zudosiert werden. Selbstverständlich ist es auch möglich, dass sich die Radikalinitiatoren oder ethylenisch ungesättigten Monomeren in den Verfahrensschritten a) und b) unterscheiden.

Unter Polymerisationsbedingungen sind im Rahmen dieser Schrift dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck in den Verfahrensschritten a) und b) so ausgewählt, dass der eingesetzte Radikalinitiator eine ausreichende Halbwertszeit aufweist und dabei immer genügend Startradikale zur Verfügung stehen, um die Polymerisationsreaktion auszulösen bzw. aufrechtzuerhalten.

In den Verfahrensschritten a) und b) kommt als Reaktionstemperatur für die radikalische wässrige Emulsionspolymerisation in Anwesenheit des feinteiligen anorganischen Feststoffs der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer Atmosphärendruck durchgeführt werden, so dass die Polymerisationstemperatur 100 °C übersteigen und bis zu 170 °C betragen kann. Vorzugsweise wird in Anwesenheit leichtflüchtiger Monomere B, beispielsweise Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei Atmosphärendruck (beispielsweise im Labor) oder Überdruck (beispielsweise im technischen Maßstab) unter Sauerstoffausschluss, insbesondere unter Inertgasatmosphäre, wie beispielsweise unter Stickstoff oder Argon durchgeführt.

Prinzipiell können Verfahren dem wässrigen Polymerisationsmedium in untergeordnetem Maße auch gut wasserlösliche organische Lösungsmittel, wie beispielsweise Methanol, Ethanol, Isopropanol, Butanole, aber auch Aceton etc. zugesetzt werden können. Von Bedeutung ist allerdings, dass die Menge an zugesetztem organischem Lösungsmittel so bemessen ist, dass sie am Ende von Verfahrensschritt b) ≤10 Gew.-%, vorteilhaft ≤5 Gew.-% und insbesondere vorteilhaft ≤2 Gew.-%, jeweils bezogen auf die Gesamtmenge an Wasser der erfindungsgemäß erhältlichen wässrigen Kompositpartikel-Dispersion, beträgt. Mit Vorteil werden erfindungsgemäß keinerlei solche Lösungsmittel zugesetzt.

Neben den vorgenannten Komponenten können gemäß dem bevorzugten Verfahren zur Herstellung der wässrigen Kompositpartikel-Dispersion optional auch radikalkettenübertragende Verbindungen eingesetzt werden, um die Molekulargewichte der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen. Die optional eingesetzte Gesamtmenge der radikalkettenübertragenden Verbindungen, bezogen auf die Gesamtmonomerenmenge, ist in der Regel ≤5 Gew.-%, oft ≤3 Gew.-% und häufig ≤1 Gew.-%.

Abhängig von der Stabilität der eingesetzten wässrigen Feststoffdispersionen können die Verfahrensschritte a) und b) im sauren, neutralen oder basischen pH-Wertbereich durchgeführt werden. Beim Einsatz von Schichtsilikaten beträgt der pH-Wert vorteilhaft ≥5 und ≤11, insbesondere vorteilhaft ≥6 und ≤10 (jeweilige Probe gemessen bei Raumtemperatur und Atmosphärendruck). Die Einstellung der pH-Wertbereiche ist dem Fachmann geläufig und erfolgt insbesondere mit nichtoxidierenden anorganischen Säuren, wie Salz-, Schwefel- oder Phosphorsäure oder anorganischen Basen, wie Ammoniak, Natrium- oder Kaliumhydroxid.

Selbstverständlich können die nach dem bevorzugten Verfahren zugänglichen wässrigen Kompositpartikel-Dispersionen auch weitere, dem Fachmann geläufige optionale Hilfsstoffe, wie beispielsweise so genannte Verdickungsmittel, Entschäumer, Puffersubstanzen, Konservierungsmittel etc. in üblichen Mengen enthalten.

Werden nach dem bevorzugten Verfahren Silanmonomere eingesetzt, so werden in einer bevorzugten Ausführungsform der im Verfahrensschritt a) vorgelegten wässrigen Feststoffdispersion, im Verfahrensschritt a) zuerst lediglich ≥5 und ≤70 Gew.-%, vorteilhaft ≥10 und ≤50 Gew.-% der Gesamtmenge der Silanmonomeren während einer Zeitdauer ≥5 und ≤240 Minuten, vorteilhaft ≥30 und ≤120 Minuten und insbesondere vorteilhaft ≥45 und ≤90 Minuten bei einer Temperatur ≥20 °C, mit Vorteil bei einer Temperatur ≥50 und ≤100 °C und mit besonderem Vorteil bei einer Temperatur ≥65 und ≤95 °C und erst daran anschließend die gegebenenfalls verbliebenen anderen ethylenisch ungesättigten Monomeren und der radikalische Polymerisationsinitiator unter Polymerisationsbedingungen zudosiert. Die verbliebene Restmenge an Silanmonomeren wird anschließend im Verfahrensschritt b) gemeinsam mit den anderen ethylenisch ungesättigten Monomeren unter Polymerisationsbedingungen zudosiert. Die Gesamtmenge an Silanmonomeren beträgt in dieser bevorzugten Ausführungsform ≥0,1 und ≤2 Gew.-%, bezogen auf die Gesamtmonomerenmenge.

Die so erhältlichen wässrigen Kompositpartikel-Dispersionen weisen üblicherweise einen Gesamtfeststoffgehalt ≥1 und ≤70 Gew.-%, häufig ≥5 und ≤65 Gew.-% und oft ≥10 und ≤60 Gew.-% auf.

Die so erhältlichen Kompositpartikel können unterschiedliche Strukturen aufweisen. Dabei können die Kompositpartikel ein oder mehrere der feinteiligen anorganische Feststoffteilchen enthalten. Die feinteiligen anorganischen Feststoffteilchen können vollständig von der Polymermatrix umhüllt sein. Es ist aber auch möglich, dass ein Teil der feinteiligen anorganischen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen anorganischen Feststoffteilchen auf der Oberfläche der Polymermatrix gebunden ist.

Auch können die nach Abschluss der Polymerisationsreaktion im wässrigen Polymerisationsmedium verbliebenen Restmengen an nicht umgesetzten ethylenisch ungesättigten Monomeren oder anderen leichtflüchtigen Verbindungen durch Dampf- und/oder Inertgasstrippung bzw. durch chemische Restmonomerenentfernung, wie sie beispielsweise in den Schriften DE-A 4419518, EP-A 767180 oder DE-A 3834734 beschrieben sind, entfernt werden, ohne dass sich die Eigenschaften der wässrigen Kompositpartikel-Dispersionen nachteilig verändern.

Die nach dem bevorzugten Verfahren gebildeten wässrigen Kompositpartikel-Dispersionen sind stabil und weisen einen niedrigen Koagulatgehalt, in der Regel ≤0,5 Gew.-%, bevorzugt ≤0,1 Gew.-% und insbesondere bevorzugt ≤0,05 Gew.-%, jeweils bezogen auf die wässrige Kompositpartikel-Dispersion auf.

Gemäß einem weiteren bevorzugten Verfahren werden Kompositpartikel-Dispersionen gebildet, welche durch Mischen einer wässrigen Polymerdispersion P, erhalten durch radikalische Emulsionspolymerisation von

A) ≥ 40 Gew.- % eines oder mehrerer Monomer M4 ausgewählt unter Estern $\alpha,\beta$-ungesättigter Carbonsäuren, Vinylestern gesättigter Carbonsäuren und vinylaromatischen Monomeren,

B) 0,1 bis 10 Gew.-%, eines oder mehrerer Monomer M5 ausgewählt unter $\alpha,\beta$-ethylenisch ungesättigter Monocarbonsäuren, $\alpha,\beta$-ethylenisch ungesättigter Dicarbonsäuren, $\alpha,\beta$-ethylenisch ungesättigter Sulfonsäuren, $\alpha,\beta$-ethylenisch ungesättigter Phosphorsäuren und $\alpha,\beta$-ethylenisch ungesättigter Phosphonsäuren,

C) 0,5 bis 15 Gew.-% eines oder mehrerer ethylenisch ungesättigter Monomere M6, welche mindestens eine Alkoxysilylgruppe aufweisen,

D) 0,1 bis 10 Gew.-%, eines ethylenisch ungesättigten oberflächenaktiven Monomeren M7 enthaltend mindestens eine anionische und/oder nichtionische emulgierende Gruppe, und

E) gegebenenfalls bis zu 20 Gew.-% von mit den Monomeren der Gruppen M4, M5, M6 und M7 copolymerisierbaren sonstigen Monomeren M8, jeweils bezogen auf die Gesamtmonomermenge, mit der Maßgabe, dass anstelle oder zusätzlich zur Copolymerisation des Monomeren M6 nach der Emulsionspolymerisation 0,5 bis 15 Gew.-%, bezogen auf die Gesamtmonomermenge, eines Monomeren zugegeben wird, das neben mindestens einer Alkoxysilylgruppe mindestens eine Amino-, Merkapto- oder Epoxidgruppe aufweist,

und kolloidalem Siliciumdioxid erhalten wird.

Verfahren zur Herstellung einer solchen Kompositpartikel-Dispersion sind beispielsweise in der DE 10 2006 046 860 beschrieben, auf deren Offenbarung ausdrücklich Bezug genommen wird.

Die Durchführung einer Emulsionspolymerisation mit diesen Methoden führt zur Gewinnung einer Polymerdispersion P, deren Polymerteilchen eine Carboxylgruppe, eine Alkoxysilylgruppe und eine emulgierende Gruppe enthalten und in Wasser dispergiert sind. Die Auswahl der eingesetzten Monomerkombinationen erfolgt wie oben beschrieben so, dass die für den vorgesehenen Anwendungszweck gewünschte Glasübergangstemperatur erhalten werden.

Bevorzugte Monomere M4 sind die oben unter (a) aufgeführten Monomere.

Zusätzlich oder anstelle davon können Hydroxylgruppen-haltige oder Epoxidgruppen-haltige (Meth)acrylsäurealkylester eingesetzt werden. Kommt als (Meth)acrylsäurealkylester ein Hydroxylgruppen-haltiger bzw. ein Epoxidgruppenhaltiger (Meth)acrylsäurealkylester zur Anwendung, so enthält die damit hergestellte Kunststoffdisperson zusätzlich zur Carboxyl- und Alkoxysilylgruppe auch eine Hydroxylgruppe bzw. eine Epoxidgruppe.

Zu den Beispielen für Hydroxylgruppen-haltige (Meth)acrylsäurealkylester gehören Hydroxymethylmethacrylat, Hydroxyethylacrylat, Hydroxypropylmethacrylat, Hydroxypropylacrylat, Hydroxybutylmethacrylat und Hydroxybutylacrylat. Diese Alkylester koennen alleine oder in Form einer Kombination von zwei oder mehreren Estern verwendet werden.

Zu den Beispielen für Epoxidgruppen-haltige (Meth)acrylsäurealkylester gehören Glycidylmethacrylat oder Glycidylacrylat.

Weiterhin können zusätzlich oder anstelle der Methacrylate (a) als Hauptmonomere Monomeren der obengenannten Klasse (b) und/oder (c) gewählt werden.

Zusätzlich zu wenigstens einem Hauptmonomer M4 können zur Herstellung der Polymerdispersion P Monomere M5 eingesetzt. Die Monomere M5 entsprechen den obengenannten Monomeren M2, nämlich ethylenisch ungesättigte Monomere mit wenigstens einer Säuregruppe wie Carbonsäuren, Sulfonsäuren, Phosphorsäuren oder Phosphonsäuren oder deren Gemische eingesetzt werden.

Zusätzlich zu wenigstens einem Hauptmonomer M4 können zur Herstellung der Polymerdispersion P Monomere M6 oder deren Gemische eingesetzt werden. Die Monomere M6 entsprechenden den obengenannten Silanmonomeren M3.

Anstelle von Monomeren der Gruppe M6 oder zusätzlich zu Monomeren M6 kann dem Copolymeren nach der Emulsionspolymerisation ein Monomer zugegeben werden, das neben mindestens einer Alkoxysilylgruppe mindestens eine Amino-, Merkapto- oder Epoxidgruppe aufweist, wie der DE 10 2006 046 860 Absatz (0067) bis [0079] zu entnehmen ist, auf die ausdrücklich hingewiesen wird.

Neben den Hauptmonomeren M4 und den wenigstens eine Säuregruppe tragenden Monomeren der Gruppe M5, den Monomeren M6 werden zur Herstellung der Kunststoffdispersion Monomere M8, nämlich ethylenisch ungesättigte oberflächenaktive Monomeren, die mindestens eine anionische und/oder nichtionische emulgierende Gruppe enthalten, eingesetzt. Bei diesen Emulgatoren handelt es sich um Tenside, die während der Emulsionspolymerisation in das Copolymer eingebaut werden.

Die Monomeren M7 weisen mindestens eine hydrophile Gruppe auf, wobei die hydrophile Gruppe nichtionisch sein kann, beispielsweise eine Polyglykolgruppe, oder anionisch sein kann, beispielsweise eine Sulfat- oder Sulfonatgruppe. Bevorzugt weisen die Monomeren der Gruppe D) zusätzlich mindestens eine hydrophobe Gruppe auf, wobei die hydrophobe Gruppe beispielsweise eine Alkyl-, Cycloalkyl-, Alkenyl-, Aryl- oder Acyl-Gruppe sein kann.

Vorzugsweise weisen die Monomeren M8 eine ethylenisch ungesättigte Gruppe auf. Dabei handelt es sich insbesondere um eine Vinylgruppe, um eine Allylgruppe oder um den Rest einer ethylenisch ungesättigten Säure, wie einen Acrylsäure-, Methacrylsäure-, Itaconsäure- oder Maleinsäurerest.

Vorzugsweise weisen die Monomeren der Gruppe D) ein bis drei nichtionische oder insbesondere anionische emulgierende Gruppen auf. Als emulgierende Gruppen kommen besonders bevorzugt Polyalkylenglykolgruppen in Frage, die insbesondere anionisch funktionalisiert sind, beispielsweise mit einer Sulfat- oder Sulfonsäuregruppe.

Besonders bevorzugte Monomere sind Absatz [0085] und [0086] der DE 10 2006 046 860 zu entnehmen.

Neben den Hauptmonomeren M4, den Monomeren M5, den Monomeren M7 und gegebenenfalls den Monomeren M6 können zur Herstellung der Kunststoffdispersion Monomere M8, nämlich sonstige radikalisch polymerisierbare Monomere eingesetzt werden, die sich von den Monomeren der Gruppen M4, M5, M6 und M7 unterscheiden.

Dabei kann es sich um unterschiedlichste Gruppen von Monomeren handeln. Zu den Monomeren M8 zählen beispielsweise ethylenisch ungesättigte, nichtionische funktionelle Monomere, wie die Amide der im Zusammenhang mit den ethylenisch ungesättigten, ionischen Monomeren genannten Carbonsäuren. Beispiele dafür sind Methacrylamid und Acrylamid, sowie wasserlösliche N-Vinyllactame, wie beispielsweise N-Vinylpyrrolidon, oder auch solche Verbindungen, die als ethylenisch ungesättigte Verbindungen kovalent gebundene Polyethylenglykoleinheiten enthalten, wie Polyethylenglykolmono- oder diallylether oder die Ester ethylenisch ungesättigter Carbonsäuren mit Polyalkylenglykolen.

Weiterhin kommen als ethylenisch ungesättigte, nichtionische funktionelle Monomere Nitrile ethylenisch unge-sättigter $C_3$-$C_8$-Carbonsäuren in Frage, wie Acrylnitril und Methacrylnitril. Auch können $C_4$-$C_8$-konjugierte Diene, wie 1,3-Butadien, Isopren und Chloropren, oder aliphatische ethylenisch ungesättigte, gegebenenfalls halogensubstituierte Kohlenwasserstoffe, wie Ethylen, Propylen, Butylen, Vinylchlorid oder Vinylidenchlorid, als Monomere eingesetzt werden.

Weiterhin können den Monomeren Vernetzer zugesetzt werden. Monomeren gehören sowohl Verbindungen, die eine an das Doppelbindungssystem kovalent gebundene Acetoacetoxy-Einheit aufweisen, als auch Verbindungen mit kovalent gebundenen Harnstoffgruppen. Zu den erstgenannten Verbindungen zählen insbesondere Acetoacetoxyethyl(meth)acrylat und Acetessigsäureallylester. Zu den harnstoffgruppenhaltigen Verbindungen gehören zum Beispiel N-Vinyl- und N-Allyl-Harnstoff sowie Derivate des Imidazolidin-2-ons, wie N-Vinyl- und N-Allyl-imidazolidin-2-on, N-Vinyloxyethyl-imidazolidin-2-on, N-(2-(Meth)acrylamidoethyl)-imidazolidin-2-on, N-(2-(Meth)acryloxyethyl)imidazolidin-2-on, N-(2-(Meth)acryloxyacetamidoethyl)imidazolidin-2-on, sowie weitere dem Fachmann bekannte Haftungsvermittler auf Basis von Harnstoff oder Imidazolidin-2-on. Zur Verbesserung der Haftung eignet sich auch Diacetonacrylamid in Kombination mit einer Nachgabe von Adipinsäuredihydrazid zur Dispersion.

Als Vernetzer können sowohl bifunktionelle als auch polyfunktionelle Monomere eingesetzt werden. Beispiele hierfür sind Diallylphthalat, Diallylmaleinat, Triallylcyanurat, Tetraallyloxyethan, Divinylbenzol, Butandiol-1,4-di(meth) acrylat, Triethylenglykol-di(meth)acrylat, Divinyladipat, Allyl(meth)acrylat, Vinylcrotonat, Methylenbisacrylamid, Hexandioldiacrylat, Pentaerythroldiacrylat und Trimethylolpropantriacrylat.

Die erfindungsgemäss eingesetzten Polymere leiten sich von mindestens 40 Gew.-%, vorzugsweise 50 bis 90 Gew.-% an Monomere M4 ab. Dabei kann es sich um ein Monomer oder eine Mischung unterschiedlicher Monomerer dieser Gruppe handeln. Außerdem leiten sich die erfindungsgemäß eingesetzten Copolymere von 0,1 bis 10 Gew.-%, vorzugsweise 1 bis 6 Gew.-% an Monomeren M5 ab. Dabei kann es sich um ein Monomer oder eine Mischung unterschiedlicher Monomerer dieser Gruppe handeln.

Ferner leiten sich die erfindungsgemäß eingesetzten Polymere von 1 bis 15 Gew.-%, vorzugsweise 2 bis 10 Gew.-% Monomeren M6 ab. Dabei kann es sich um ein Monomer oder eine Mischung unterschiedlicher Monomerer dieser Gruppe handeln. Die Monomeren M6 sind optional, allerdings ist deren Einsatz bevorzugt. Anstelle von oder zusätzlich zu den Monomeren M6 können Amino-, Merkapto- oder Epoxidfunktionalisierte Alkoxysilan enthaltende Monomere eingesetzt werden.

Der Anteil der Monomeren M7 in einpolymerisierter Form bezogen auf das Polymer (fest) beträgt 0,1 bis 10 Gew.-%, vorzugsweise 0,5 bis 5 Gew.-%. Der Anteil der Monomeren M8 in einpolymerisierter Form bezogen auf das Polymer beträgt 0 bis 20 Gew.-%, vorzugsweise 1 bis 15 Gew.-%.

Die Mengenangaben der Monomeren sind auf die bei der Emulsionspolymerisation und gegebenenfalls bei der Nachgabe eingesetzte Gesamtmenge der Monomeren bezogen. Der Anteil der in das Copolymer einpolymerisierten Monomeren entspricht im allgemeinen den zugesetzten Monomeren.

Besonders bevorzugt wird eine durch radikalische Emulsionspolymerisation hergestellte Polymerdispersion, die ein von Acrylat und/oder Methacrylat als Hauptmonomer abgeleitetes Homo- oder Copolymer oder ein von Vinylester als Hauptmonomer abgeleitetes Homo- oder Copolymer ist, vorzugsweise ein Polyacrylat oder ein Polyvinylester mit einer Glasübergangstemperatur $T_g$ im Bereich von -60 bis +40 °C.

Die erfindungsgemäß eingesetzte Polymerdispersion P kann neben den einpolymerisierten Emulgatoren zusätzlich durch Schutzkolloide und/oder durch Emulgatoren stabilisiert werden. Diese können bereits während der Emulsionspolymerisation vorliegen oder danach zugesetzt werden.

Beispiele für Schutzkolloide sind die obengenannten sowie die in der DE 10 2006 046 860 offenbarten, auf deren Lehre ausdrücklich Bezug genommen wird. Der Gewichtsanteil derartiger gegebenenfalls anwesender Schutzkolloide, bezogen auf die Gesamtmenge der eingesetzten Monomeren, beträgt üblicherweise bis zu 15%.

In vielen Fällen ist es vorteilhaft, bei der Herstellung der Dispersionen, zusätzlich zu den Schutzkolloiden oder anstelle von Schutzkolloiden nichtionische und/oder anionische Emulgatoren zu verwenden. Geeignete Emulgatoren sind die obengenannten sowie die in der DE 10 2006 046 860 offenbarten, auf deren Lehre ausdrücklich Bezug genommen wird. Entsprechendes gilt für die zu wählenden Mengen.

Die erfindungsgemäß eingesetzten wässrigen Polymerdispersionen besitzen typischerweise Feststoffgehalte von 20 bis 70 Gew.-%, vorzugsweise 30 bis 65 Gew.-%, und besonders bevorzugt 35 bis 60 Gew.-%.

Gegebenenfalls enthalten die erfindungsgemäss eingesetzten Polymerdispersionen noch weitere an sich übliche Zusätze.

Die Durchführung der Emulsionspolymerisation erfolgt nach dem Fachmann bekannten Verfahren insbesondere nach den in der DE 10 2006 046 860 beschriebenen Verfahren auf die ausdrücklich Bezug genommen wird. Bevorzugt setzt man einphasige Emulsionspolymerisate ein.

Als radikalische Polymerisationsinitiatoren (Radikalinitiatoren) sind prinzipiell alle obengenannten Radikalinitiatoren geeignet. Vorzugsweise werden jedoch wasserlösliche Persulfate, insbesondere Ammoniumpersulfat oder Natriumpersulfat zum Starten der Polymerisation verwendet.

Weiterhin können auch die obengenannten radikalkettenübertragenden Verbindungen eingesetzt werden, um die Molekulargewichte der durch die Polymerisation zugänglichen Polymerisate zu kontrollieren.

Zur Stabilisierung verwendetes Schutzkolloid und/oder Emulgator kann ebenfalls entweder zu Beginn der Polymerisation komplett vorgelegt oder partiell vorgelegt und partiell dosiert oder komplett während der Polymerisation zudosiert werden.

Die Polymerisationstemperatur bewegt sich typischerweise im Bereich von 20 bis 120 °C, vorzugsweise im Bereich von 30 bis 110 °C und ganz besonders bevorzugt im Bereich von 45 bis 95 °C.

Nach Abschluss der Polymerisationsreaktion können Restmonomere wie oben beschrieben entfernt werden.

Geeignetes kolloidales Siliciumdioxd ist bevorzugt eine wässerige kolloidale Dispersion oder Suspension ultrafeiner Siliciumdioxidteilchen. Der Teilchendurchmesser primärer Teilchen in dieser Dispersion oder Suspension beträgt bevorzugt 2 bis 100 nm und die primären Teilchen sind kugelförmig. Das erfindungsgemäss eingesetzte kolloidale Siliciumdioxid c) ist vorzugsweise ein amorphes Siliciumdioxid und ist entweder vom anionischen oder vom kationischen Typ (= anionische oder kationische Oberflächenladungen der Teilchen, welche durch entsprechende Gegenionen kompensiert werden). Bevorzugt eingesetzt werden Dispersionen, bei denen die Teilchen anionische Oberflächenladungen aufweisen und durch Alkali- oder Ammoniumionen, insbesondere durch Natrium-, Kalium- oder Ammoniumionen, stabilisiert sind. Ferner kann das kolloidale Siliciumdioxid ein monodisperses oder ein polydisperses Siliciumdioxid sein, bei dem die Partikel einzeln und/oder in Form von Aggregaten vorliegen. Kolloidales Siliciumdioxid ist im Handel erhältlich, beispielsweise unter den Handelsnamen Klebosol oder Köstrosol. Weiterhin sind die obengenannten siliziumhaltigen Verbindungen geeignet.

Das kolloidale Siliciumdioxid wird typischerweise in einer Menge von 5 bis 200 Gewichtsteilen, bezogen auf die Menge an Copolymer, verwendet.

Üblicherweise wird das kolloidale Siliciumdioxid der wässrigen Polymerdispersion nach deren Herstellung zugesetzt und/oder bei der Herstellung des Beschichtungsmittels. Besonders bevorzugt ist die Zugabe des kolloidalen Siliziumdioxids nach der Herstellung der Polymerdispersion. Aus kolloidalem Siliciumdioxid und dem Polymer bilden sich die erfindungsgemäß geeigneten Kompositpartikel.

Die gemäß diesem Verfahren erhaltenen Kompositpartikel sind aufgebaut aus

- 20 bis 60 Gew.-% bevorzugt aus 20 bis 50 Gew.-%, insbesondere aus 30 bis 50 Gew.-% bezogen auf den Kompositpartikel, aus anorganischem Feststoff mit einer mittleren Teilchengröße von 5 bis 100 nm, und
- 40 bis 90 Gew.-%, bevorzugt 50 bis 80 Gew.-%, insbesondere 50 bis 70 Gew.-% bezogen auf den Kompositpartikel, aus Polymer (fest), das durch radikalische Emulsionspolymerisation der Monomere M4, M5, M6 und M7 erhältlich ist.

Beschichtungsmittel

Eine erfindungsgemäße Beschichtungsmasse enthält bezogen auf den Gesamtfeststoffgehalt

25 bis 55 Gew.-%, vorzugsweise 30 bis 50 Gew.-%, besonders bevorzugt 35 bis 45 Gew.-%, der obengenannten Kompositpartikel, in Form einer wässrigen Dispersion,

(fortgesetzt)

| | |
|---|---|
| 20 bis 50 Gew.-% | Füllstoffe, wobei 5 bis 40 Gew.-% bezogen auf dem Gesamtfeststoffgehalt ausgewählt sind unter Aluminiumsilikaten, Borsilikatgläsern, Polymethylmethacrylatteilchen und Polystyrolteilchen |
| 1 bis 30 Gew.-% | Pigmente und |
| 0 bis 5 Gew.-%, | vorzugsweise 0,01 bis 3 Gew.-%, besonders bevorzugt 0,1 bis 2,5 Gew.-%, eines oder mehrerer Verdickungsmittel, |
| 0,1 bis 20 Gew.-%, | vorzugsweise 0,1 bis 10 Gew.-%, besonders bevorzugt 0,1 bis 5 Gew.-% je weitere Hilfsstoffe, wie zum Beispiel Biozide, Pigmentverteiler, Filmbildehilfsmittel und Entschäumer. |

5 bis 40 Gew.-% des Füllstoffs (nachfolgend als Füllstoff (i) bezeichnet), bezogen auf den Gesamtfeststoffgehalt der Beschichtungsmasse, werden ausgewählt unter Aluminiumsilikaten, Borsilikatgläsern, Polymethylmethacrylatteilchen und Polystyrolteilchen. Aluminiumsilikate sind beispielsweise erhältlich unter dem Namen Zeeospheres White Ceramic Microspheres (3M Speciality Materials). Borsilikatgläsern (3M Speciality Materials). Polymethylmethacrylatteilchen und Polystyrolteilchen sind unter den Marken Spheromers und Dynoseeds (Firma Microbeads) erhältlich.

Bevorzugt werden anorganische Füllstoffe (i) wie Aluminiumsilikate und Borsilikatgläser.

Gemäß einer anderen Ausführungsform werden organische Füllstoffe (i) bevorzugt wie Polymethylmethacrylatteilchen und Polystyrolteilchen.

Füllstoff (i) hat bevorzugt eine mittlere Teilchengröße d50 von 3 bis 30 $\mu$m. Bevorzugt werden Aluminiumsilikate mit einer mittleren Teilchengröße d50 von 3 bis 20 $\mu$m. Ebenfalls bevorzugt werden Borsilikatgläsern mit einer mittleren Teilchengröße d50 von 15 bis 30 $\mu$m. Weiterhin bevorzugt werden Polymethylmethacrylatteilchen und/oder Polystyrolteilchen jeweils mit einer mittleren Teilchengröße d50 von 6 bis 30 $\mu$m.

Die genannten Füllstoffe (i) können einzeln aber auch im Gemisch eingesetzt werden. Bevorzugt wird eine Mischung aus mindestens einem anorganischen Füllstoff mit mindestens einem organischen Füllstoff. Besonders bevorzugt wird eine Mischung organischer Füllstoff/anorganischer Füllstoff im Verhältnis von 1/4 bis 3/1 gewählt.

Zusätzlich zu Füllstoffen (i) können weitere von diesen verschiedene anorganische Füllstoffe (nachfolgend als Füllstoff (ii) bezeichnet) eingesetzt werden.

Als weitere anorganische Füllstoffe (ii) eignen sich beispielsweise Füllstoffpartikel aus Andalusit, Silimanit, Kyanit, Mullit, Pyrophylit, Omogolit oder Allophan. Weiterhin geeignet sind Verbindungen auf der Basis von Natriumaluminaten, Silikate, wie z.B. Aluminiumsilikate wie Feldspäte mit Teilchemgrößen d50 von kleiner als 3$\mu$m, Calciumsilikate oder Kieselsäuren (Aerosil). Ebenfalls geeignet sind Mineralien wie Kieselerde, Calciumsulfat (Gips), das nicht aus Rauchgasentschwefelungsanlagen stammt in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotit, die Gruppe der Soro-, Cyclo-, Ino-, Phyllo- und Tectosilikate, die Gruppe der schwer löslichen Sulfate, wie Gips, Anhydrit oder Schwerspat, sowie Erdalkalicarbonate, wie Calciumcarbonat, beispielsweise in Form von Calcit oder Kreide.

Die genannten anorganischen Materialien können einzeln aber auch im Gemisch eingesetzt werden. Weitere geeignete Materialien sind gefälltes oder natürliches Kaolin, Talkum, Magnesium- oder Aluminiumhydroxid (zur Einstellung der Brandklasse), Zinkoxid sowie Zirkoniumsalze. Mittels Zugabe von Leichtfüllstoffen - keramischen Mikrohohlkugeln, Glashohlkugeln, Schaumglaskugeln oder sonstigen Leichtfüllstoffen, wie sie beispielsweise von der Fa. Omega-Minerals hergestellt werden, lassen sich Parameter wie Dimensionsstabilität und Dichte beeinflussen.

In Beschichtungsmitteln werden naturgemäß feinteilige Füllstoffe bevorzugt. Die Füllstoffe können als Einzelkomponenten eingesetzt werden. In der Praxis haben sich jedoch auch Füllstoffmischungen bewährt, z. B. Calciumcarbonat/Kaolin, Calciumcarbonat/Talkum.

Geeignete anorganische Füllstoffe (ii) sind die Omyacarb®-Marken von der Fa. Omya und die Finntalc®-Marken von der Fa. Mondo Minerals, die Celite®- und OptimatTM-Marken von der Fa. World Minerals und die Aerosil®-Marken von Evonik Industries AG.

Die Pigmente dienen dazu das Beschichtungsmittel einzufärben. Dazu verwendet man organische Pigmente und/oder anorganische Pigmente wie Eisenoxide. Dazu zählen anorganische Weißpigmente wie Titandioxid, vorzugsweise in der Rutilform, wie die Kronos®-Marken von der Fa. Kronos, die Tiona®-Marken von der Fa. Millenium, die TIOXIDE®-Marken von der Fa. Huntsman, Ti-Pure®-Marken von der Fa. Du-Pont de Nemours, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque®-Dispersionen. Die Pigmente werden in Mengen von 1 bis 30 Gew.-%, bevorzugt 10 bis 25 Gew.-% eingesetzt.

Der Anteil der Pigmente und Füllstoffe in einem Beschichtungsmittel kann durch die Pigmentvolumenkonzentration (PVK) beschrieben werden. Die PVK beschreibt das Verhältnis des Volumens an Pigmenten (VP) und Füllstoffen (VF) zum Gesamtvolumen, bestehend aus den Volumina an Bindemittel (VB), Pigmenten und Füllstoffen eines getrockneten Beschichtungsfilms in Prozent: PVK = (VP + VF) x 100 / (VP + VF + VB).

Bevorzugt werden Beschichtungsmittel mit einer PVK im Bereich von 50 bis 65.

Bei den Verdickungsmitteln handelt es sich in der Regel um hochmolekulare Stoffe, die entweder Wasser aufsaugen und dabei aufquellen oder intermolekulare Gitterstrukturen bilden. Die organischen Verdickungsmittel gehen schließlich in eine zähflüssige echte oder kolloidale Lösung über.

Verwendet werden können auch Verdickungsmittel auf Basis von Acrylsäure und Acrylamid (beispielsweise Collacral® HP), carboxylgruppenhaltige Acrylsäureester Copolymere wie Latekoll® D, PU-Verdickungsmittel (beispielsweise Collacral® PU 75), Cellulosen und deren Derivate sowie natürliche Verdickungsmittel, wie beispielsweise Bentonite, Alginate oder Stärke.

Die Verdickungsmittel werden in Mengen von 0 bis 5 Gew.-%, bevorzugt 0,1 bis 2,5 Gew.-% eingesetzt.

Zusammenfassend handelt es sich bei der elastischen Beschichtungsmasse im wesentlichen um eine wässrige Kompositpartikel-Dispersion. Weitere Hilfsstoffe können in einfacher Weise der wässrigen Dispersion zugesetzt werden.

Zu den weiteren Hilfsstoffen gehören beispielsweise Konservierungsmittel zur Vermeidung von Pilz- und Bakterienbefall, Lösungsmittel zur Beeinflussung der offenen Zeit und der mechanischen Eigenschaften, beispielsweise Butylglykol, Dispergierhilfen zur Verbesserung des Benetzungsverhaltens, beispielsweise Pigmentverteiler NL (BASF SE, DE), Emulgatoren (Emulphor® OPS 25, Lutensol® TO 89), Frostschutzmittel (Ethylenglykol, Propylenglykol). Weitere Hilfsstoffe können sein, Vernetzer, Haftvermittler (Acrylsäure, Silane, Aziridine) oder Entschäumer.

Die Herstellung der erfindungsgemäßen Beschichtungsmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d.h. in der Regel die wässrige Dispersion des Polymeren mit der Pigmentpaste bzw. Pigmentdispersion zu vermischen.

Das erfindungsgemäße Anstrichmittel kann in üblicher Weise auf Substrate aufgebracht werden, z. B. durch Streichen, Spritzen, Tauchen, Rollen, Rakeln etc..

Die erfindungsgemäßen Beschichtungsmittel eignen sich zur Beschichtung von Flächen, Objekten, Substraten oder Untergründen, die in permanentem Wasserkontakt sind. Die Materialien auf denen das Beschichtungsmittel aufgebracht wird, können dabei vielfältig sein, ohne dass eine verschlechterte Haftung zu beobachten ist. So sind als Materialien Holz, Holzwerkstoffe, Kunststoff, Stein, Beton, Putze, Reparaturmörtel, metallische Materialien, Stahl, Metallgecoateter Stahl, sowie Fliesen geeignet. Die Beschichtungsmittel zeigen ebenfalls auf Farbanstrichen als Untergrund eine gute Haftung. Vorzugsweise findet das Beschichtungsmittel zur Beschichtung von Hohlräumen, die mit Wasser, insbesondere Schwimmbadwasser gefüllt sind, Verwendung. Ebenfalls bevorzugt ist die Verwendung zur Beschichtung von Flächen, Objekten, Substraten oder Untergründen, die in ständigem Wasserkontakt mit Fluss- oder Meerwasser stehen.

Auch über einen längeren Zeitraum des permanenten Kontaktes mit Wasser insbesondere Schwimmbadwasser, ist keine Aufweichung der Farbe oder Ablösen vom Untergrund zu beobachten.

Die erfindungsgemäßen Beschichtungsmittel zeichnen sich aus durch einfache Handhabung, gute Verarbeitungseigenschaften und hohes Deckvermögen. Die Anstrichmittel sind schadstoffarm. Sie haben gute anwendungstechnische Eigenschaften, z. B. eine gute Wasserfestigkeit, gute Nasshaftung, gute Blockfestigkeit, eine gute Überstreichbarkeit und sie zeigen beim Auftragen einen guten Verlauf. Das verwendete Arbeitsgerät lässt sich leicht mit Wasser reinigen.

Die nachfolgenden Beispiele sollen die Erfindung näher erläutern. Bei den Prozentangaben in den Beispielen handelt es sich um Gewichtsprozent sofern nicht anders angegeben.

Bestimmung des Feststoffgehaltes

Der Feststoffgehalt wurde generell bestimmt, indem ca. 1 g der Kompositpartikel-Dispersion in einem offenen Aluminiumtiegel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Bestimmung des Koagulatgehaltes

Zur Bestimmung des Koagulatgehaltes wurden bei Raumtemperatur ca. 500 g der wässrigen Kompositpartikel-Dispersion über ein 45 μm-Nylonsieb filtriert, welches vor der Filtration gewogen wurde. Nach der Filtration spülte man das Sieb mit wenig entionisiertem Wasser (ca. 50 ml) und trocknete es dann im Trockenschrank bei 100 °C und Atmosphärendruck bis zur Gewichtskonstanz (ca. 1 Stunde). Nach dem Abkühlen auf Raumtemperatur wurde das Sieb erneut gewogen. Der Gehalt an Koagulat ergab sich als Differenz der beiden Wägungen, jeweils bezogen auf die zur Filtration eingesetzte Menge an wässriger Kompositpartikel-Dispersion. Es wurden jeweils zwei Bestimmungen des Koagulatgehaltes durchgeführt. Die in den jeweiligen Beispielen angegebenen Werte entsprechen den Mittelwerten dieser beiden Bestimmungen.

Teilchengrößenbestimmung

Die Bestimmung der Teilchengröße der Kompositpartikel erfolgte generell nach der Methode der quasielastischen Lichtstreuung (DIN-ISO 13321) mit einem High Performance Particle Sizer (HPPS) der Fa. Malvern Instruments Ltd..

pH-Wert

Der pH-Wert wurde generell mittels eines Micropal pH538-Gerätes der Fa. Wissenschaftlich-Technische-Werkstätten (WTW) GmbH bei Raumtemperatur bestimmt.

a) Herstellung einer wässrigen Kompositpartikel-Dispersion

Beispiel 1

In einen 2 l-Vierhalskolben, ausgerüstet mit einem Rückflußkühler, einem Thermometer, einem mechanischen Rührer sowie einer Dosiervorrichtung, wurden bei 20 bis 25°C (Raumtemperatur) und Atmosphärendruck unter Stickstoffatmosphäre und Rühren (200 Umdrehungen pro Minute) 416,6 g Nalco® 1144 (40 gew.-%iges kolloidales Siliziumdioxid mit einem mittleren Teilchendurchmesser von 14 nm [nach Angaben des Herstellers]; Marke der Fa. Nalco), daran anschließend 10,8 g einer 20 gew.-%igen wässrigen Lösung eines C16C18-Fettalkoholethoxylats mit durchschnittlich 18 Ethylenoxid-Einheiten (Lutensol® AT18; Marke der BASF SE) und daran anschließend 315,0 g entionisiertes Wasser innerhalb von 5 Minuten zugegeben. Anschließend wurde das Vorlagengemisch auf 70 °C aufgeheizt.
Parallel stellte man als Zulauf 1 eine Monomerenmischung, bestehend aus 12,6 g Methylmethacrylat und 18,8 g n-Butylacrylat als Zulauf 2 2,9 g (3-Methacryloxypropyl)-trimethoxysilan, als Zulauf 3 eine Initiatorlösung, bestehend aus 2,1 g Natriumperoxodisulfat, 5,4 g einer 10 gew.-%igen wässrigen Lösung von Natriumhydroxid und 193,0 g entionisiertem Wasser sowie als Zulauf 4 eine Monomermischung bestehend aus 87,5 g Methylmethacrylat, 131,2 g n-Butylacrylat und 2,5 g Hydroxyethylmethacrylat, her.
Anschließend wurden dem gerührten Vorlagengemisch bei 70 °C innerhalb von 90 Minuten über eine separate Zulaufleitung 0,9 g von Zulauf 2 kontinuierlich zugegeben. Dabei heizte man das Reaktionsgemisch 45 Minuten nach Beginn des Zulaufs 2 auf eine Reaktionstemperatur von 85 °C auf. Eine Stunde nach Beginn des Zulaufs 2 wurden dem Reaktionsgemisch innerhalb einer Zeitspanne von 120 Minuten über zwei separate Zulaufleitungen gleichzeitig beginnend, die Gesamtmenge von Zulauf 1 und 158,8 g von Zulauf 3 mit kontinuierlichem Mengenströmen zudosiert. Daran anschließend wurden dem Reaktionsgemisch innerhalb einer Zeitspanne von 120 Minuten über separate Zulaufleitungen gleichzeitig beginnend, die Gesamtmenge von Zulauf 4 und die verbliebene Restmenge von Zulauf 2 sowie innerhalb einer Zeitspanne von 135 Minuten die verbliebene Restmenge von Zulauf 3 mit kontinuierlichem Mengenströmen zudosiert. Anschließend wurde die erhaltene wässrige Kompositpartikel-Dispersion eine weitere Stunde bei Reaktionstemperatur gerührt und danach auf Raumtemperatur abgekühlt.
Die so erhaltene wässrige Kompositpartikel-Dispersion war transluzent, niedrigviskos und wies einen Feststoffgehalt von 35,5 Gew.-% auf. Der pH-Wert der Kompositpartikel-Dispersion betrug 9,1. Die mittlere Teilchengröße (Z-Mittel) der Kompositpartikel wurde zu 117 nm bestimmt. Nach der Methode der Analytischen Ultrazentrifuge (AUZ; vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Reslution Particle Size Distribution and Density Gradient Techniques, W. Mächtle, Seiten 147 bis 175) konnten keine freien Siliziumdioxid-Teilchen nachgewiesen werden.

Formulierung eines Beschichtungsmittels

Beispiel

1. Allgemeine Vorschrift zur Herstellung von Beschichtungsmitteln

Die einzelnen Komponenten (Herstellernachweis s. Tabelle 1) wurden in der Menge (Gewichtsteile) und Reihenfolge, wie in Tabelle 2 angegeben, unter Rühren mit einem Zahnscheibenrührer zudosiert. Nach Zugabe des Titandioxidpigments, wurde die Drehzahl auf 2000 Upm erhöht und solange dispergiert, bis die Paste glatt, d. h. frei von Klümpchen war. Man erhielt 66 Gewichtsteile einer Paste.

Diese Paste ließ man, falls erforderlich, auf Raumtemperatur abkühlen und gab die restlichen Komponenten, die in Tabelle 3 aufgeführt sind, in den darin angegebenen Mengen und dieser Reihenfolge bei reduzierter Drehzahl zu. Man erhielt 200 Gewichtsteile eines wässrigen Beschichtungsmittels.

Tabelle 1 - verwendete Rohstoffe

| Funktion | Name | Hersteller |
|---|---|---|
| Dispergiermittel | Ultradispers® AB 30 (Polymer auf Basis von Acrylsäure und n-Butylacrylat) | BASF SE |
| Entschäumer | Byk 022 (Polysiloxan) | Byk-Chemie GmbH, Wesel |
| Titandioxidpigment | Kronos® 2190 | Kronos Titan GmbH, Leverkusen |
| Pigment | Heucodur® Blau 5-100 | Heubach GmbH |
| Pigment | Luconyl Blau 7080 | BASF SE |
| Konservierungsmittel | Acticide MBS | Thor Chemie GmbH |
| Netzmittel | AMP 90 | Angus Chemie GmbH |
| Verdickungsmittel | Betolin® V 30 | Woeliner GmbH |
| Füllstoff | Omyacarb 2 GU (2 μm) | Omya GmbH |
| Füllstoff | Omyacarb 5 GU (5 μm) | Omya GmbH |
|  | Zeeospheres™ W 610 (10 μm) (Aluminium-Silikat-Keramik) | 3M Deutschland GmbH |
|  | Dynoseeds® TS 40 (40 μm) (Polystyrolkugeln) | Microbeads AS |
| Verdickungsmittel | Collacral® LR 8990 | BASFSE |
| Verdickungsmittel | Collacral® PU 10 W | BASF SE |

Tabelle 2: Formulierung der Paste der erfindungsgemäßen Beschichtung 1

| Komponente | Name | Menge [g] |
|---|---|---|
| Kompositpartikel-Dispersion des Beispiels 1 |  | 350 |
|  | AMP 90 | 8 |
|  | Acticide MBS | 2 |
|  | Ultradispers AB 30 | 10 |
|  | Betolin V 30 | 2 |
| Butylglykol |  | 15 |
| Entschäumer | Byk 022 | 3 |
| Titandioxidpigment | Kronos® 2190 | 80 |
|  | Heucodur Blau 5-100 | 32 |

(fortgesetzt)

| Komponente | Name | Menge [g] |
|---|---|---|
| | Luconyl Blau 7080 | 4 |
| Gesamt (Paste) | | 506 |

Tabelle 3: Komponenten des erfindungsgemäßen Beschichtungsmittels 1

| Komponente | | Menge |
|---|---|---|
| Wässrige Paste | | 506 |
| Füllstoff | Omyacarb 2 GU (2 $\mu$m) | 30 |
| Füllstoff | Omyacarb 5 GU (5 $\mu$m) | 60 |
| Füllstoff | Zeeospheres W 610 (10 $\mu$m) (AluminiumSilikat-Keramik) | 60 |
| Füllstoff | Dynoseeds TS 40 (40 $\mu$m) (Polystyrolkugeln) | 36 |
| | Byk 022 | 2 |
| Verdickungsmittel | Collacral LR 8990 | 6 |
| Kompositpartikel-Dispersion des Beispiels 1 | | 290 |
| Lösemittel | Testbenzin K30 | 10 |
| Gesamt | | 1000 |

Tabelle 4: Formulierung der Paste der erfindungsgemäßen Beschichtung 2

| Komponente | Name | Menge [g] |
|---|---|---|
| Kompositpartikel-Dispersion des Beispiels 1 | | 350 |
| | AMP 90 | 10 |
| | Ultradispers AB 30 | 10 |
| | Betolin V 30 | 1 |
| Butylglykol | | 5 |
| Entschäumer | Byk 022 | 3 |
| Titandioxidpigment | Kronos® 2190 | 40 |
| | Heucodur Blau 5-100 | 40 |
| | Luconyl Blau 7080 | 1 |
| Gesamt (Paste) | | 460 |

Tabelle 5: Komponenten des erfindungsgemäßen Beschichtungsmittels 2

| Komponente | | Menge |
|---|---|---|
| Wässrige Paste | | 460 |
| Füllstoff | Omyacarb 2 GU (2 $\mu$m) | 30 |
| Füllstoff | Omyacarb 5 GU (5 $\mu$m) | 37 |
| Füllstoff | Zeeospheres W 610 (10 $\mu$m) (AluminiumSilikat-Keramik) | 78 |
| Füllstoff | Dynoseeds TS 40 (40 $\mu$m) (Polystyrolkugeln) | 36 |
| Konservierungsmittel | Kupfer(I)-oxid | 2 |

(fortgesetzt)

| Komponente | | Menge |
|---|---|---|
| Pigment | Zinkoxid | 20 |
| | Byk 022 | 2 |
| Verdickungsmittel | Collacral PU 10 W | 13 |
| Kompositpartikel-Dispersion des Beispiels 1 | | 314 |
| Lösemittel | Testbenzin K30 | 8 |
| Gesamt | | 1000 |

Analog zu dieser Formulierung lassen sich mit den in den Beispielen 1, 3, 5 und 10 der DE 10 2006 046 860 beschriebenen Dispersionen Beschichtungsmittel formulieren, die gute anwendungstechnische Eigenschaften aufweisen.

Tabelle 6: Formulierung der Paste der Vergleichsfarbe

| Komponente | Name | Menge [g] |
|---|---|---|
| | Wasser | 100 |
| | Ultradispers AB 30 | 10 |
| Konservierungsmittel | Parmetol A26 | 3 |
| Entschäumer | Byk 022 | 3 |
| Butylglykol | | 25 |
| Konservierungsmittel | Protectol PP | 10 |
| Propylenglykol | | 25 |
| Verdickungsmittel | Collacral LR8989 | 16 |
| Titandioxidpigment | Kronos® 2190 | 80 |
| | Heucodur Blau 5-100 | 32 |
| | Luconyl Blau 7080 | 4 |
| Gesamt (Paste) | | 308 |

Tabelle 7: Komponenten der Vergleichsfarbe

| Komponente | | Menge |
|---|---|---|
| Wässrige Paste | | 308 |
| Füllstoff | Finntalc M15 | 30 |
| Füllstoff | Omyacarb 5 GU (5 $\mu$m) | 60 |
| Füllstoff | Quarzmehl Sikron F 500 | 130 |
| Entschäumer | Byk 022 | 2 |
| Verdickungsmittel | Collacral LR 8990 | 6 |
| Hydrophobe, selbstvernetzende Acrylatdispersion | Acronal A706 | 439 |
| Hydrophobiermittel | Poligen WE 1 | 25 |
| Gesamt | | 1000 |

Test zur Bestimmung der Wasserfestigkeit

Die erfindungsgemäßen Beschichtungen wurden durch streichen oder rollen auf Steingut-Fliesen aufgestrichen und 2 Tage an der Luft getrocknet. Dann wurden sie für mindesten 4 Wochen in einer Kunststoffwanne mit einem Überstand von 5 cm in Leitungswasser gelagert. Die Messung der Farbwerte nach Wasserlagerung muß nach völliger Durchtrocknung der Farbe erfolgen. Die Prüfung der Beschichtungen erfolgte durch Messung der Farbe nach DIN 6174: "Farbmetrische Bestimmung von Farbmaßzahlen und Farbabständen im angenähert gleichförmigen CIELAB-Farbenraum" vor und nach der Wasserlagerung (L*a*b*-Farbwerte) und ergab eine Farbabweichung durch Lagerung $\Delta E=$ Wurzel $((L_1-L_2)^2 + (a_1-a_2)^2 + (b_1-b_2)^2)$.

Eine weitere Beurteilung erfolgte visuell auf eventuelle Blasenbildung oder Ablösung der Beschichtung vom Substrat. Eine weitere Prüfung erfolgte durch kratzen mit dem Fingernagel auf mechanische Beständigkeit der Beschichtung nach Wasserlagerung.

Prüfkriterien:

1) $\Delta E$: Die Farbabweichung durch Lagerung sollte für eine gute Farbe kleiner sein als 1.

2) Haftung/Blasenbildung:

  Note 1 - keine Blasenbildung
  Note 2 - einige, kleine Blasen <5 mm Ø
  Note 3 - viele Blasen < 1 cm Ø
  Note 4 - viele große Blasen > 1 cm Ø
  Note 5 - Farbe hat sich komplett abgelöst

3) Kratzfestigkeit

  Note 1 - keine Schäden durch kratzen
  Note 2 - minimale Schädigung
  Note 3 - kleiner Schaden ca. 5mm Ø
  Note 4 - größere Fläche abgelöst > 1 cm Ø
  Note 5 - Farbe lässt sich komplett ablösen

Die erfindungsgemäße Farbe laut Tabellen 2 und 3 erhielt folgende Bewertung nach 4 Wochen Wasserlagerung:

  $\Delta E = 1$; 2 Haftung/Blasenbildung 1; Kratzfestigkeit 1-2

Die erfindungsgemäße Farbe laut Tabellen 4 und 5 erhielt folgende Bewertung nach 4 Wochen Wasserlagerung:

  $\Delta E = 0,8$; Haftung/Blasenbildung 1; Kratzfestigkeit 1-2

Die Vergleichsfarbe laut Tabellen 6 und 7 erhielt folgende Bewertung nach Wasserlagerung:

  $\Delta E = 2,5$; Haftung/Blasenbildung 3; Kratzfestigkeit 4

**Patentansprüche**

**1.** Beschichtungsmittel in Form einer wässrigen Zusammensetzung enthaltend:

  25 bis 55 Gew.-%  Kompositpartikel mit einer mittleren Teilchengröße von 50 bis 350 nm in Form einer wässrigen Dispersion, welche aufgebaut sind aus
    - 20 bis 60 Gew.-% bezogen auf den Kompositpartikel aus anorganischem Feststoff mit einer mittleren Teilchengröße von 5 bis 100 nm,

(fortgesetzt)

|  | - 40 bis 90 Gew.-%, bevorzugt 40 bis 80 Gew.-% bezogen auf den Kompositpartikel aus einer Polymermatrix mit einem $T_g$ im Bereich von -60 bis +40 °C, die durch radikalische Emulsionspolymerisation wenigstens eines ethylenisch ungesättigten Monomers erhältlich ist und |
| 20 bis 50 Gew.-% | Füllstoffe, wobei 5 bis 40 Gew.-% bezogen auf dem Gesamtfeststoffgehalt ausgewählt sind unter Aluminiumsilikaten, Borsilikatgläsern, Polymethylmethacrylatteilchen und Polystyrolteilchen |
| 1 bis 30 Gew.-% | Pigmente und |
| 0 bis 5 Gew.-% | eines oder mehrerer Verdickungsmittel |
| 0,1 bis 20 Gew.-% | weitere Hilfsmittel |

jeweils bezogen auf den Gesamtfeststoffgehalt.

2. Beschichtungsmittel nach Anspruch 1, **dadurch gekennzeichnet, dass** der anorganische Feststoff eine siliziumhaltige Verbindung ist.

3. Beschichtungsmittel nach Anspruch 1 oder 2, **dadurch gekennzeichnet, dass** die Polymermatrix der Kompositpartikel aufgebaut ist aus Monomeren ausgewählt unter Estern $\alpha,\beta$-ethylenisch ungesättigter Mono- und Dicarbonsäuren mit $C_1$-$C_{20}$-Alkanolen, Vinylaromaten, Estern von Vinylalkohol mit $C_1$-$C_{18}$-Monocarbonsäuren, ethylenisch ungesättigten Nitrilen, $C_2$-$C_8$-Monoolefinen, nicht aromatischen Kohlenwasserstoffen mit mindestens zwei konjugierten Doppelbindungen, ethylenisch ungesättigten Monomeren mit wenigstens einer Säuregruppe und ethylenisch ungesättigten Monomeren mit wenigstens einer Amino-, Amido-, Ureido- oder N-heterocyclische Gruppe und/oder deren am Stickstoff protonierten alkylierten Ammoniumderivate oder ethylenisch ungesättigten Monomeren, welche wenigstens eine siliziumhaltige funktionelle Gruppe aufweisen (Silanmonomere).

4. Beschichtungsmittel nach einem der Ansprüche 1 bis 3, **dadurch gekennzeichnet, dass** die Kompositpartikel aufgebaut werden durch radikalische Emulsionspolymerisation von ethylenisch ungesättigten Monomeren enthaltend 0,01 bis 10 Gew.-% bezogen auf die Gesamtmonomeren, eines eine siliziumhaltige funktionelle Gruppe aufweisenden ethylenisch ungesättigten Monomers (Silanmonomer).

5. Beschichtungsmittel nach einem der Ansprüche 1 bis 4, **dadurch gekennzeichnet, dass** die Kompositpartikel aufgebaut werden durch radikalische Emulsionspolymerisation bei der ethylenisch ungesättigte Monomere in wässrigem Medium dispers verteilt und mittels 0,05 bis 2 Gew.-% wenigstens eines radikalischen Polymerisationsinitiators in Gegenwart von 1 bis 1000 Gew.-% wenigstens eines dispers verteilten, feinteiligen anorganischen Feststoffes, jeweils bezogen auf die Gesamtmonomermenge, und wenigstens eines Dispergierhilfsmittels polymerisiert werden, indem

a) wenigstens eine Teilmenge des anorganischen Feststoffs in einem wässrigen Polymerisationsmedium in Form einer wässrigen Feststoffdispersion vorgelegt wird und daran anschließend 0,01 bis 20 Gew.-% der Gesamtmonomermenge und mindestens 60 Gew.-% der Gesamtmenge an radikalischem Polymerisationsinitiator zudosiert werden und die zudosierten Monomere unter Polymerisationsbedingungen bis zu einem Monomerenumsatz $\geq 80$ Gew.-% polymerisiert werden (Polymerisationsstufe 1), und daran anschließend dem erhaltenen Polymerisationsgemisch
b) die gegebenenfalls verbliebene Restmenge des anorganischen Feststoffs, die gegebenenfalls verbliebene Restmenge des radikalischen Polymerisationsinitiators und die verbliebene Restmenge der Monomere unter Polymerisationsbedingungen zudosiert und bis zu einem Monomerenumsatz $\geq 90$ Gew.-% polymerisiert werden (Polymerisationsstufe 2).

6. Beschichtungsmittel nach Anspruch 5, **dadurch gekennzeichnet, dass** in Verfahrensschritt a) die Gesamtmenge des anorganischen Feststoffs vorgelegt wird.

7. Beschichtungsmittel nach Anspruch 5 oder 6, dass im Verfahrensschritt a) der wässrigen Feststoffdispersion zuerst lediglich $\geq 5$ und $\leq 70$ Gew.-% der Gesamtmenge der Silanmonomeren über einen Zeitraum von 5 bis 240 Minuten zudosiert werden und daran anschließend die gegebenenfalls verbliebenen anderen ethylenisch ungesättigten Monomeren und der radikalische Polymerisationsinitiator zudosiert werden.

**8.** Beschichtungsmittel nach einem der Ansprüche 5 bis 7, **dadurch gekennzeichnet, dass** als Dispergierhilfsmittel ein anionischer und/oder ein nichtionischer Emulgator eingesetzt wird.

**9.** Beschichtungsmittel nach einem der Ansprüche 1 bis 8, **dadurch gekennzeichnet, dass** die Pigmentvolumenkonzentration im Bereich von 50 bis 65 liegt.

**10.** Schwimmbadfarbe enthaltend als Bindemittel Kompositpartikel gemäß den Ansprüchen 1 bis 9.

**11.** Verwendung des Beschichtungsmittels gemäß den Ansprüchen 1 bis 9 zur Beschichtung von Flächen, Objekten, Substraten oder Untergründen, die in permanenten Wasserkontakt sind.

**12.** Verwendung des Beschichtungsmittels gemäß den Ansprüchen 1 bis 9 zur Beschichtung von Hohlräumen, die mit Schwimmbadwasser gefüllt sind.

**Claims**

**1.** A coating material in the form of an aqueous composition comprising:

25% to 55% by weight ofcomposite particles having an average particle size of 50 to 350 nm, in the form of an aqueous dispersion, which are constructed of
- 20% to 60% by weight, based on the composite particle, of inorganic solid having an average particle size of 5 to 100 nm,
- 40% to 90%, preferably 40% to 80%, by weight, based on the composite particle, of a polymer matrix having a $T_g$ in the range from -60 to +40°C and obtainable by free-radical emulsion polymerization of at least one ethylenically unsaturated monomer, and

20% to 50% by weight offillers, with 5% to 40% by weight, based on the total solids content, being selected from aluminum silicates, borosilicate glasses, polymethyl methacrylate particles, and polystyrene particles,

1% to 30% by weight of pigments, and

0% to 5% by weight of one or more thickeners

0.1% to 20% by weight of other auxiliaries

based in each case on the total solids content.

**2.** The coating material according to claim 1, wherein the inorganic solid is a silicon compound.

**3.** The coating material according to claim 1 or 2, wherein the polymer matrix of the composite particles is constructed from monomers selected from esters of $\alpha,\beta$-ethylenically unsaturated monocarboxylic and dicarboxylic acids with $C_1$-$C_{20}$ alkanols, vinylaromatics, esters of vinyl alcohol with $C_1$-$C_{18}$ monocarboxylic acids, ethylenically unsaturated nitriles, $C_2$-$C_8$ monoolefins, nonaromatic hydrocarbons having at least two conjugated double bonds, ethylenically unsaturated monomers having at least one acid group, and ethylenically unsaturated monomers having at least one amino, amido, ureido or N-heterocyclic group, and/or their alkylated ammonium derivatives protonated on the nitrogen, or ethylenically unsaturated monomers which contain at least one silicon-containing functional group (silane monomers).

**4.** The coating material according to any of claims 1 to 3, wherein the composite particles are constructed by free-radical emulsion polymerization of ethylenically unsaturated monomers comprising 0.01% to 10% by weight, based on the total monomers, of an ethylenically unsaturated monomer containing a silicon-containing functional group (silane monomer).

**5.** The coating material according to any of claims 1 to 4, wherein the composite particles are constructed by free-radical emulsion polymerization in which ethylenically unsaturated monomers are dispersed in an aqueous medium and polymerized by means of 0.05% to 2% by weight of at least one free-radical polymerization initiator in the presence of 1% to 1000% by weight of at least one dispersed, finely divided inorganic solid, based in each case on the total monomer amount, and at least one dispersing assistant, by

a) including at least a portion of the inorganic solid in an initial charge in an aqueous polymerization medium, in the form of an aqueous dispersion of solids, and subsequently metering in 0.01% to 20% by weight of the total monomer amount and at least 60% by weight of the total amount of free-radical polymerization initiator, and polymerizing the added monomers under polymerization conditions to a monomer conversion $\geq$ 80% by weight (polymerization stage 1), and subsequently

b) metering any remainder of the inorganic solid, any remainder of the free-radical polymerization initiator, and the remainder of the monomers into the polymerization mixture of stage 1 under polymerization conditions and continuing polymerization to a monomer conversion $\geq$ 90% by weight (polymerization stage 2).

6. The coating material according to claim 5, wherein the total amount of the inorganic solid is included in the initial charge in step a) of the process.

7. The coating material according to claim 5 or 6, wherein first only $\geq$ 5% and $\leq$ 70% by weight of the total amount of the silane monomers is metered into the aqueous dispersion of solids in step a) of the process, over a period of 5 to 240 minutes, and subsequently any remaining, other ethylenically unsaturated monomers and the free-radical polymerization initiator are metered in.

8. The coating material according to any of claims 5 to 7, wherein an anionic and/or a nonionic emulsifier is used as dispersing assistant.

9. The coating material according to any of claims 1 to 8, wherein the pigment volume concentration is in the range from 50 to 65.

10. A swimming pool paint comprising, as binder, composite particles according to any of claims 1 to 9.

11. The use of the coating material according to claims 1 to 9 for coating surfaces, objects or substrates which are in permanent water contact.

12. The use of the coating material according to claims 1 to 9 for coating cavities filled with swimming pool water.

**Revendications**

1. Agent de revêtement sous forme d'une composition aqueuse, contenant :

25 à 55% en poids de particules composites présentant une grosseur moyenne des particules de 50 à 350 nm sous forme d'une dispersion aqueuse, qui sont formées à partir de

- 20 à 60% en poids, par rapport aux particules composites, de solide inorganique présentant une grosseur moyenne de particules de 5 à 100 nm,
- 40 à 90% en poids, de préférence 40 à 80% en poids, par rapport aux particules composites, d'une matrice polymère présentant une Tg dans la plage de -60 à +40°C, qui peut être obtenue par polymérisation radicalaire en émulsion d'au moins un monomère éthyléniquement insaturé et

20 à 50% en poids de charges, 5 à 40% en poids, par rapport à la teneur totale en solides, étant choisis parmi les silicates d'aluminium, les verres borosilicatés, les particules de poly((méth)acrylate de méthyle) et les particules de polystyrène,
1 à 30% en poids de pigments, et
0 à 5% en poids d'un ou de plusieurs épaississants,
0,1 à 20% en poids d'autres adjuvants, à chaque fois par rapport à la teneur totale en solides.

2. Agent de revêtement selon la revendication 1, **caractérisé en ce que** le solide inorganique est un composé contenant du silicium.

3. Agent de revêtement selon la revendication 1 ou 2, **caractérisé en ce que** la matrice polymère des particules composites est formée à partir de monomères choisis parmi les esters $\alpha,\beta$-éthyléniquement insaturés d'acides monocarboxyliques et dicarboxyliques avec des $C_1$-$C_{20}$-alcanols, les aromatiques de vinyle, les esters d'alcool vinylique avec des acides monocarboxyliques en $C_1$-$C_{18}$, les nitriles éthyléniquement insaturés, les $C_2$-$C_8$-monoo-

**EP 2 528 978 B1**

léfines, les hydrocarbures non aromatiques comprenant au moins deux doubles liaisons conjuguées, les monomères éthyléniquement insaturés présentant au moins un groupe acide et les monomères éthyléniquement insaturés présentant au moins un groupe amino, amido, uréido ou N-hétérocyclique et/ou leurs dérivés d'ammonium alkylés protonés sur l'azote ou les monomères éthyléniquement insaturés qui présentent au moins un groupe fonctionnel contenant du silicium (monomères de silane).

4. Agent de revêtement selon l'une quelconque des revendications 1 à 3, **caractérisé en ce que** les particules composites sont formées par polymérisation radicalaire en émulsion de monomères éthyléniquement insaturés contenant 0,01 à 10% en poids, par rapport à la totalité des monomères, d'un monomère éthyléniquement insaturé présentant un groupe fonctionnel contenant du silicium (monomère de silane).

5. Agent de revêtement selon l'une quelconque des revendications 1 à 4, **caractérisé en ce que** les particules composites sont formées par polymérisation radicalaire en émulsion, dans laquelle les monomères éthyléniquement insaturés sont dispersés dans un milieu aqueux et polymérisés au moyen de 0,05 à 2% en poids d'au moins un initiateur de polymérisation par voie radicalaire en présence de 1 à 1000% en poids d'au moins un solide dispersé, finement divisé, inorganique, à chaque fois par rapport à la quantité totale de monomères et d'au moins d'un adjuvant de dispersion, **en ce que**

a) on dispose au préalable au moins une quantité partielle du solide inorganique dans un milieu de polymérisation aqueux sous forme d'une dispersion aqueuse de solides puis on y ajoute en dosant 0,01 à 20% en poids de la quantité totale de monomères et au moins 60% en poids de la quantité totale d'initiateur de polymérisation par voie radicalaire et les monomères ajoutés en dosant sont polymérisés dans des conditions de polymérisation jusqu'à une conversion des monomères ≥ 80% en poids (étape de polymérisation 1), puis on ajoute en dosant au mélange de polymérisation obtenu

b) la quantité le cas échéant résiduelle du solide inorganique, la quantité le cas échéant résiduelle de l'initiateur de polymérisation par voie radicalaire et la quantité résiduelle des monomères dans des conditions de polymérisation et on polymérise jusqu'à une conversion des monomères ≥ 90% en poids (étape de polymérisation 2).

6. Agent de revêtement selon la revendication 5, **caractérisé en ce que** dans l'étape de procédé a), on dispose au préalable la quantité totale du solide inorganique.

7. Agent de revêtement selon la revendication 5 ou 6, **caractérisé en ce que** dans l'étape de procédé a), on ajoute d'abord en dosant à la dispersion aqueuse de solides seulement ≥ 5 et ≤ 70% en poids de la quantité totale des monomères de silane sur un laps de 5 à 240 minutes, puis on y ajoute en dosant les autres monomères éthyléniquement insaturés le cas échéant résiduels et l'initiateur de polymérisation par voie radicalaire.

8. Agent de revêtement selon l'une quelconque des revendications 5 à 7, **caractérisé en ce qu'**on utilise comme adjuvant de dispersion un émulsifiant anionique et/ou non ionique.

9. Agent de revêtement selon l'une quelconque des revendications 1 à 8, **caractérisé en ce que** la concentration volumique en pigments se situe dans la plage de 50 à 65.

10. Peinture pour piscine contenant comme liant des particules composites selon les revendications 1 à 9.

11. Utilisation de l'agent de revêtement selon les revendications 1 à 9 pour le revêtement de surfaces, d'objets, de substrats ou de sous-couches qui sont en contact permanent avec l'eau.

12. Utilisation de l'agent de revêtement selon les revendications 1 à 9 pour le revêtement d'espaces creux qui sont remplis d'eau de piscine.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 572128 A
- WO 0118081 A
- WO 0129106 A
- WO 03000760 A
- EP 09157984 A
- WO 2008009596 A
- EP 08163496 A
- US 3544500 A
- US 4421660 A
- US 4608401 A
- US 4981882 A
- EP 104498 A
- EP 505230 A
- GB 2227739 A
- DE 4419518 A
- EP 767180 A
- DE 3834734 A
- DE 102006046860

**In der Beschreibung aufgeführte Nicht-Patentliteratur**

- Ullmann's Encyclopedia of Industrial Chemistry. VCH, 1992, vol. A 21, 169
- **ZOSEL.** *Farbe und Lack,* 1976, vol. 82, 125-134
- Ullmanns Enzyklopädie der technischen Chemie. 1980, vol. 19, 17, 18
- **J. BRANDRUP ; E.H. IMMERGUT.** Polymer Handbook. J. Wiley, 1989
- **LONG et al.** *Tianjin Daxue Xuebao,* 1991, vol. 4, 10-15
- **BOURGEAT-LAMI et al.** *Die Angewandte Makromolekulare Chemie,* 1996, vol. 242, 105-122
- Synthesis Studies of Paramagnetic Polystyrene Latex Particles. **PAULKE et al.** Scientific and Clinical Applications of Magnetic Carriers. Plenum Press, 1997, 69-76
- **ARMES et al.** *Advanced Materials,* 1999, vol. 11 (5), 408-410
- nalysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175
- **HOUBEN-WEYL.** Methoden der organischen Chemie, Band XIV/1, Makromolekulare Stoffe. Georg-Thieme-Verlag, 1961, vol. XIV-1, 411-420
- **HOUBEN-WEYL.** Methoden der organischen Chemie, Band XIV/1, Makromolekulare Stoffe. Georg-Thieme-Verlag, 1961, 192-208
- Polymerhandbook. John Wiley & Sons, 1989, 133-141
- Analysis of Polymer Dispersions with an Eight-Cell-AUC-Multiplexer: High Reslution Particle Size Distribution and Density Gradient Techniques. **S.E. HARDING et al.** Analytical Ultracentrifugation in Biochemistry and Polymer Science. Royal Society of Chemistry, 1992, 147-175